# FASCICULE DE BREVET EUROPEEN

(11) **EP 4 343 313 B1**
(45) Date de publication et mention de la délivrance du brevet: **28.05.2025**
(21) Numéro de dépôt: 23199160.5
(22) Date de dépôt: 22.09.2023
(51) Int. Cl.: G01N 21/64, G01N 21/77, C08B 37/08, C08L 5/08, H01M 10/48, C03C 25/106, C03C 25/25, C08G 18/67, C08G 18/73

(54) **FIBRE OPTIQUE POUR LA MESURE IN SITU DE LA CONCENTRATION DE LITHIUM DANS L'ÉLECTROLYTE D'UNE BATTERIE, PROCÉDÉS D'OBTENTION DE LA FIBRE OPTIQUE ET UTILISATIONS DE CELLE-CI**
OPTISCHE FASER ZUR IN-SITU-MESSUNG DER LITHIUMKONZENTRATION IM ELEKTROLYT EINER BATTERIE, VERFAHREN ZUR HERSTELLUNG DER OPTISCHEN FASER UND DEREN VERWENDUNG
OPTICAL FIBRE FOR IN SITU MEASUREMENT OF THE LITHIUM CONCENTRATION IN THE ELECTROLYTE OF A BATTERY, METHODS FOR OBTAINING THE OPTICAL FIBER AND USES THEREOF

(30) Priorité: 23.09.2022 FR 2209696
(43) Date de publication de la demande: 27.03.2024
(73) Titulaire: Commissariat à l'Energie Atomique et aux Energies Alternatives, 75015 Paris (FR)
(72) Inventeur: PONCELET, Olivier, 38054 Grenoble (FR); DE SOUSA NOBRE, Sonia, 38054 Grenoble (FR); RACCURT, Olivier, 38054 Grenoble (FR); VILLEMIN, Elise, 38054 Grenoble (FR)
(74) Mandataire: Gevers & Orès

(56) Documents cités:
- US-A- 5 958 782
- US-A1- 2003 119 195
- US-A1- 2021 122 837
- SPICHIGER-KELLER U E ED - MCDONAGH COLETTE ET AL: "Ion- and substrate-selective optode membranes and optical detection modes", SENSORS AND ACTUATORS B: CHEMICAL, ELSEVIER BV, NL, vol. 38, no. 1-3, 1 January 1997 (1997-01-01), pages 68 - 77, XP004083673, ISSN: 0925-4005, DOI: 10.1016/S0925-4005(97)80173-6

## Description

La présente invention concerne une fibre optique fonctionnalisée par greffage sur au moins une partie de sa surface d'une pluralité de premiers groupes comprenant une sonde et par greffage, sur ladite au moins une partie de sa surface ou sur les premiers groupes, d'une pluralité de seconds groupes comprenant un cation organique, ainsi que ses procédés d'obtention.

La présente invention vise également les utilisations de ladite fibre optique, notamment pour la mesure de la concentration en lithium, en particulier pour la mesure in situ, voire in operando, de la concentration en lithium dans l'électrolyte d'une batterie.

Les avantages de la propulsion électrochimique des véhicules électriques et la nécessité d'un stockage d'énergie efficient à grande échelle, notamment dans les transports, ont induit une demande croissante de batteries hautes performances, c'est-à-dire notamment sûres, efficaces et fiables, dans les appareils électroniques portables et les véhicules électriques. Le développement de batteries plus grandes, avec une densité énergétique plus élevée et des exigences de sécurité plus strictes est ainsi crucial.

Dans ce contexte, les batteries Li-ion ont considérablement progressé au cours des dernières décennies, notamment sur des problématiques allant de la sécurité thermique à la stabilité en cyclage.

Cependant, pour atteindre le prochain niveau d'innovations en matière de batteries Li-ion, il est nécessaire de développer des capteurs pouvant être utilisés pour sonder les batteries en temps réel et in operando, afin de permettre d'optimiser les performances et de déterminer plus précisément l'état des cellules.

Les systèmes conventionnels de gestion des batteries, qui s'appuient généralement sur des paramètres tels que le courant, la tension et la température, fournissent des informations limitées sur les processus chimiques et physiques qui se déroulent dans la batterie pendant son fonctionnement. La compréhension des processus de dégradation et de leur évolution dans le temps est également limitée en raison de la nature complexe des batteries. Afin d'améliorer la durée de vie, la sécurité et la fiabilité des batteries actuelles ainsi que des technologies de batteries émergentes, des informations plus détaillées provenant des cellules sont nécessaires. En particulier, il est important de pouvoir connaître la concentration locale en ion lithium au sein de l'électrolyte de ces batteries. Cette concentration varie lors des cycles de charge et de décharge, surtout au cours du vieillissement de la cellule. La perte de lithium actif par des processus de dégradation interne de la cellule, tels que par exemple la croissance de l'interface solide/électrolyte (SEI pour Solid-Electrolyte Interface) va engendrer une perte de performance. De nombreuses tentatives ont été faites pour observer les distributions de lithium dans les électrodes par des techniques telles que l'absorption des rayons X au voisinage du seuil (XANES), la résonance magnétique nucléaire (RMN), la diffraction des rayons X, la diffraction des neutrons, l'émission de rayons y/x induite par des particules (PIGE/PIXE), la microspectroscopie Raman et la spectroscopie photoélectronique aux rayons X durs (HX-PES). Ces techniques ne permettent toutefois pas de mesurer directement la concentration de lithium dans l'électrolyte. En outre, ces techniques ne permettent pas de mesure in situ, voire in operando, ou nécessitent même de démonter la batterie à analyser. Elles sont également très coûteuses. Ce sont en fait des techniques de laboratoire inutilisables pour le monitoring d'un pack batterie en fonctionnement.

Le document US 2021/122837 A1 divulgue un capteur à fibre optique pour la détection d'au moins un élément alcalin sous forme cationique.

Des sondes, en particulier à base de groupe aryl ou hétéroaryl substitué par aux moins deux groupes vicinaux choisis parmi -OH et les groupes alcoxy en C₁-C₃, sont susceptibles de pouvoir permettre la mesure de la concentration en lithium dans les conditions précitées. Cependant, la concentration de lithium à mesurer est souvent très élevée (de l'ordre d'1 à 2M), et nécessite une quantité élevée de ces sondes pour une mesure effective. Or ces sondes ont tendance, lorsqu'elles ne complexent pas le lithium, de s'auto-condenser, ce qui engendre une baisse du nombre de ces sondes, pourtant critique comme indiqué ci-dessus. En effet, lors des cycles de charge ou décharge de la batterie, les ions lithium migrent vers les électrodes. Le risque est que les molécules chélatantes soient dégradées (avec notamment formation de goudrons), et donc d'observer une baisse de sensibilité.

Un objectif de l'invention est ainsi de fournir un capteur permettant de mesurer localement, in situ voire in operando, la concentration en lithium au cœur de la batterie, dans l'électrolyte, et de donner notamment une information en temps réelle qui soit exploitable par le système de contrôle des batteries d'accumulateurs (BMS pour « Battery Management System »). A cet effet, le capteur de l'invention est stable dans les électrolytes, notamment dans les carbonates organiques, et ne perturbe pas le fonctionnement de la batterie.

Un autre objectif de l'invention est de fournir un capteur pouvant être facilement obtenu à partir de matériaux usuels (à savoir des fibres optiques).

Encore un autre objectif de l'invention est de fournir un capteur pouvant facilement être mis en œuvre dans une méthode de mesure simple, rapide et peu coûteuse, de la concentration en lithium. Il s'agit d'une simple mesure de fluorescence, qui répond donc aux critères précités. Encore un autre objectif de l'invention est de fournir un capteur stable dans le temps, et permettant de mesurer à tout moment des concentrations élevées en lithium.

Dans ce contexte, les Inventeurs ont identifié de manière surprenante que la présence sur le capteur de cations organiques permet de protéger les sondes, notamment de l'autocondensation, et de les stabiliser, tout en ne gênant en rien la mesure de la concentration en lithium par les sondes. En effet, en présence de lithium, le complexe avec la sonde se reforme au détriment du cation organique. La présence de cations organiques greffés permet ainsi de conserver la sensibilité du capteur de lithium dans le temps.

Ainsi, selon un premier aspect, l'invention concerne une fibre optique portant sur au moins une partie de sa surface une pluralité de groupes A, et une pluralité de groupes B,
les groupes A portant un groupe R étant un groupe aryl ou hétéroaryl substitué par aux moins deux groupes vicinaux choisis parmi -OH et les groupes alcoxy en C₁-C₃, en particulier -OMe, lesdits groupes vicinaux étant plus particulièrement -OH,
les groupes B portant un groupe R' étant un cation organique.

Par « cation organique », on entend en particulier un groupe organique portant une charge positive. Il peut par exemple s'agir d'un groupe comprenant un atome N protoné.

Selon un mode de réalisation particulier, le contre-ion de l'anion organique est PF₆⁻(hexafluorophosphate).

Sauf indication contraire, lorsqu'il est mentionné « groupe A », il est entendu qu'il s'agit du groupe A, en incluant le groupe R (qui est ainsi un substituant du groupe A). Il en est de même du groupe B avec le groupe R'.

Selon un mode de réalisation particulier, la pluralité de groupes A et la pluralité de groupes B sont directement portés par ladite au moins une partie de sa surface.

Selon un autre mode de réalisation particulier, les groupes A sont substitués par au moins un groupe B, en particulier par un groupe B.

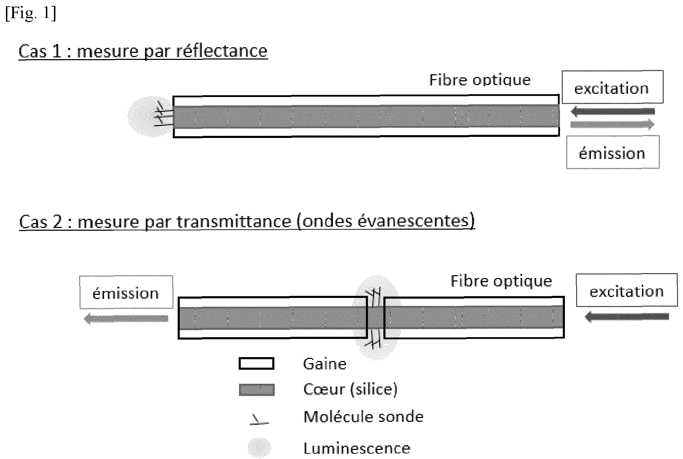

Ladite au moins une partie de la surface est par exemple située en bout de fibre, ou le long de la fibre (figure 1).

Selon un mode de réalisation particulier, le groupe R est choisi parmi les groupes suivants:

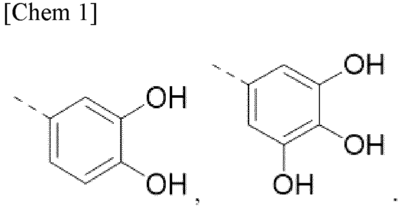

Selon un mode de réalisation particulier, le groupe R' est choisi parmi les ammoniums quaternaires et les cations hétéroaromatiques, en particulier les cations aza-hétéroaromatiques. Les ammoniums quaternaires sont notamment les ammoniums quaternaires des bases suivantes : aniline, phénylpyridine, quinoline, isoquinoline, pyrrole, indole et pipéridine, ces bases étant optionnellement substituées par un ou plusieurs substituants, par exemple des alkyles en C1-C3, en particulier un méthyle.

Selon un mode de réalisation particulier, le groupe R' est choisi parmi les groupes suivants: 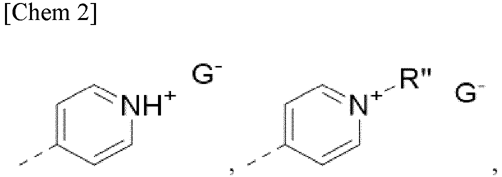 dans lesquels :
G⁻ représente un anion PF₆⁻, un anion triflimidate ([(CF₃SO₂)₂N]⁻) ou un anion halogéné, par exemple Cl⁻, G étant de préférence PF₆⁻ ;
R" représente un alkyle en C1-C3, en particulier un méthyle.

Selon un mode de réalisation plus particulier, le groupe R' est choisi parmi les groupes suivants: 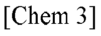 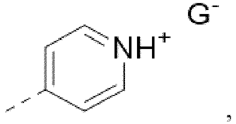 dans lequel :
G⁻ représente un anion PF₆⁻, un anion triflimidate ([(CF₃SO₂)₂N]⁻) ou un anion halogéné, par exemple Cl⁻, G étant de préférence PF₆⁻.

Selon un mode de réalisation particulier, les groupes A et/ou B sont des chaînes portant respectivement le groupe R ou R', en particulier en position terminale, ces chaînes étant indépendamment choisies parmi les chaînes alkyles ou alcényles linéaires ou branchés, lesquelles sont optionnellement interrompues par un ou des atomes ou groupes choisis parmi -NH-, O, S, urée, uréthane, amide, ester, les arène diyles et les hétéroarènes diyles.

Selon un mode de réalisation particulier, l'invention concerne une fibre optique telle que définie précédemment portant sur au moins une partie de sa surface une pluralité de groupes de formule (I) et une pluralité de groupes de formule (I') suivantes : 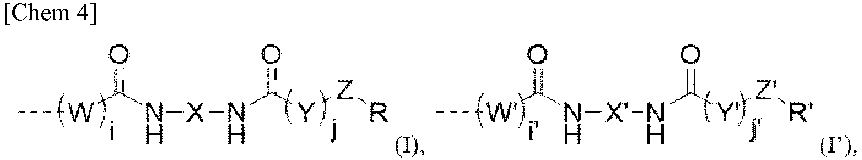 dans lesquelles :
W, W', Y et Y' sont indépendamment choisis parmi O et NH ;
i, i', j et j' sont indépendamment choisis parmi 0 et 1 ;
X représente un groupe de formule (II) suivante : 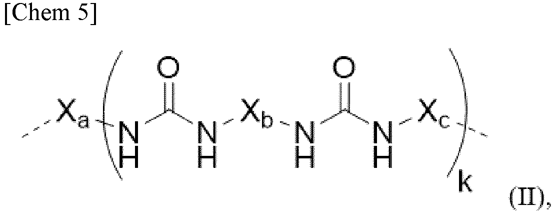
X' représente un groupe de formule (II') suivante : 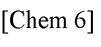 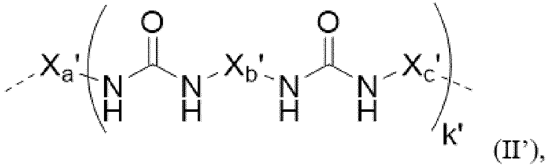 dans lesquelles :
   k et k' sont indépendamment choisis parmi 0 et 1 ;
   Xₐ, Xₐ', X_{c} et X_{c}' sont indépendamment choisis choisi parmi :
      - les groupes Xₐ₁ étant des alcane diyles linéaires et branchés en C₁-C₁₂, en particulier les groupes de formule -(CH₂)ₙ- avec n de 1 à 12, ou des alcène diyles linéaires et branchés en C₂-C₁₂, les groupes Xₐ₁ étant notamment des alcane diyles linéaires et branchés en C₁-C₁₂ ;
      - les groupes de formule -Xₐ₁-NH-Xₐ₁-, où Xₐ₁ est à chaque occurrence indépendamment tel que défini ci-dessus, en particulier les groupes de formule -(CH₂)ₙ-NH-(CH₂)ₘ- avec n et m étant indépendamment de 1 à 12 ;
      - les groupes de formule -Xₐ₁-NHC(=O)-NH-Xₐ₁- ou -Xₐ₁-NHC(=O)-NH-Xₐ₁-NHC(=O)-NH-Xₐ₁-, où Xₐ₁ est à chaque occurrence indépendamment tel que défini ci-dessus, en particulier les groupes de formule -(CH₂)ₙ-NHC(=O)-NH-(CH₂)ₘ- avec n et m étant indépendamment de 1 à 12 ;
   X_{b} et X_{b}' sont indépendamment choisis parmi :
      - les alcane diyles linéaires et branchés en C₁-C₁₂, en particulier les groupes de formule - (CH₂)ₙ- avec n de 1 à 12, les alcane triyles branchés en C₁-C₁₂, et les alcène diyles linéaires et branchés en C₂-C₁₂, les groupes X_{b} et X_{b}' étant notamment des alcane diyles ou triyles linéaires et branchés en C₁-C₁₂ ; portant optionnellement, notamment en position(s) terminale(s), au moins un groupe -(O-CH₂-CH₂)ₚ- ou -(O-CH₂-C(CH₃)H)ₚ-, avec p étant un entier de 1 à 10 ;
      - les arène diyles et les hétéroarène diyles ;
   X_{b} étant optionnellement substitué par un groupe A de formule (III) suivante : 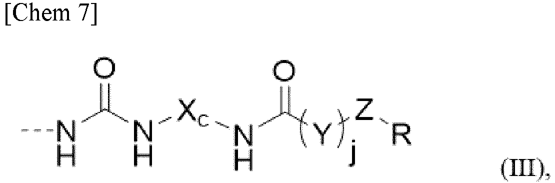
   X_{c}, Y, j, Z et R étant tels que définis ci-dessus ou ci-dessous,
   X_{b}' étant optionnellement substitué par un groupe A de formule (III') suivante : 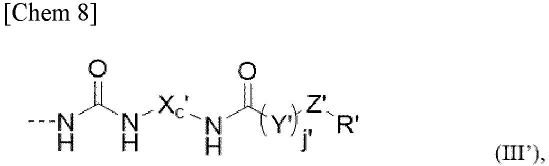
   X_{c}', Y', j', Z' et R' étant tels que définis ci-dessus ou ci-dessous,
   Z et Z' étant indépendamment absents ou choisis parmi les alcane diyles linéaires et branchés en C₁-C₁₂ et les alcène diyles linéaires et branchés en C₂-C₁₂, Z étant en particulier un alcane ou un alcène diyle linéaire en C₂, ledit groupe Z étant optionnellement substitué par un groupe -COOH ; R et R' sont tels que définis précédemment.

Selon un mode de réalisation particulier, W et W', Y et Y', X et X', i et i', et/ou j et j' sont identiques ; W et W', Y et Y', X et X', i et i', et j et j' étant identiques.

Selon un mode de réalisation particulier, l'invention concerne une fibre optique telle que définie précédemment, dans laquelle :
- les groupes de formule (I) sont choisi parmi les groupes de formule suivante : 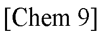 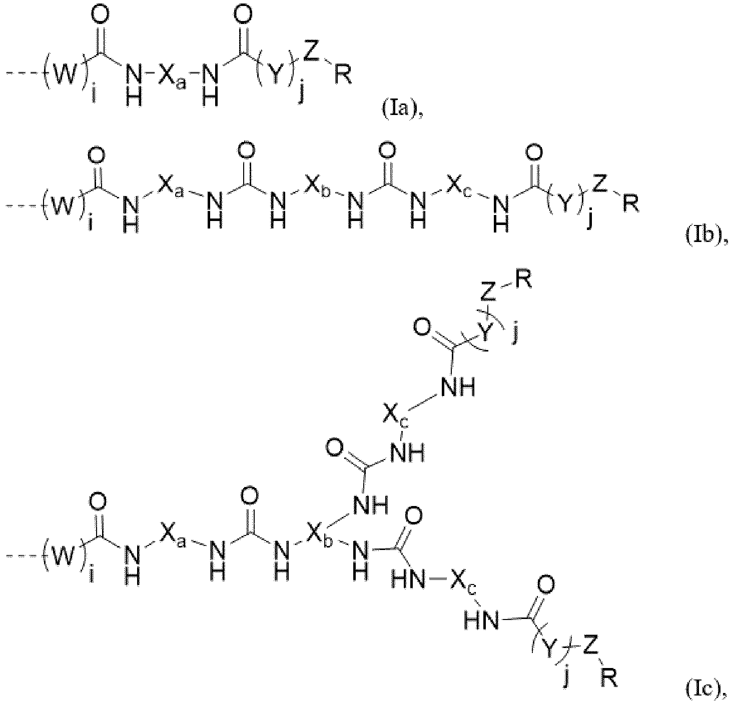 et/ou
- les groupes de formule (I') sont choisi parmi les groupes de formule suivante :

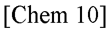

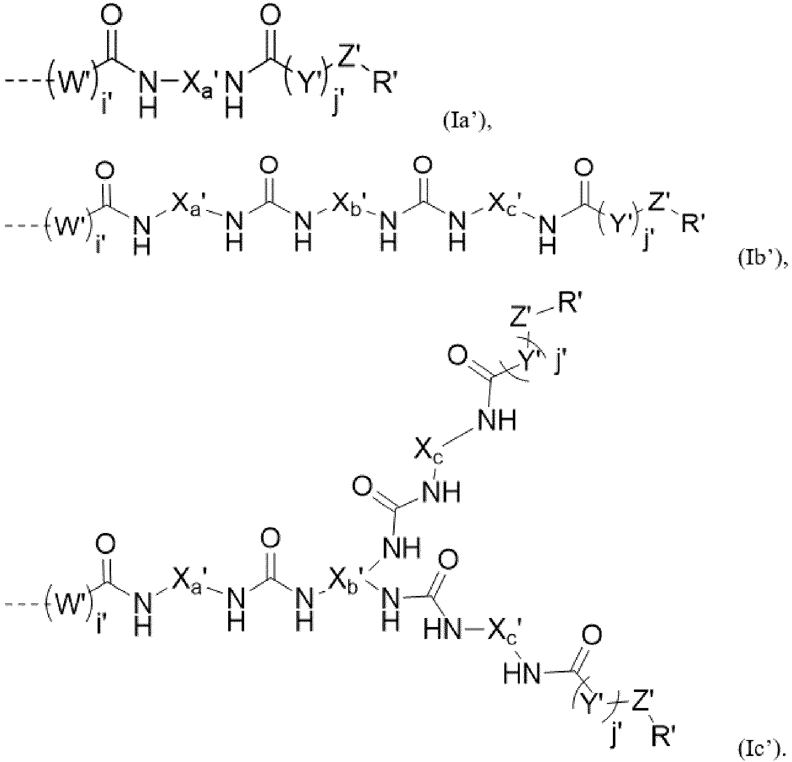

Selon un mode de réalisation particulier, l'invention concerne une fibre optique telle que définie précédemment portant sur au moins une partie de sa surface une pluralité de groupes de formule (I) suivante : 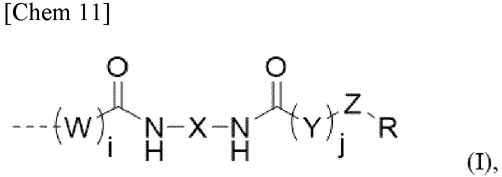 dans laquelle :
W et Y sont indépendamment choisis parmi O et NH ;
i et j sont indépendamment choisis parmi 0 et 1 ;
X représente un groupe de formule (II) suivante : 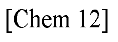 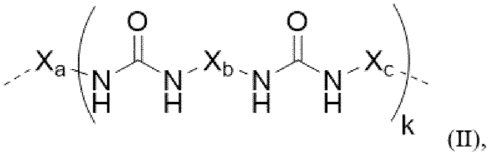 dans laquelle :
   k est choisi parmi 0 et 1 ;
   Xₐ et X_{c} sont indépendamment choisis choisi parmi :
      - les groupes Xₐ₁ étant des alcane diyles linéaires et branchés en C₁-C₁₂, en particulier les groupes de formule -(CH₂)ₙ- avec n de 1 à 12, ou des alcène diyles linéaires et branchés en C₂-C₁₂, les groupes Xₐ₁ étant notamment des alcane diyles linéaires et branchés en C₁-C₁₂ ;
      - les groupes de formule -Xₐ₁-NH-Xₐ₁-, où Xₐ₁ est à chaque occurrence indépendamment tel que défini ci-dessus, en particulier les groupes de formule -(CH₂)ₙ-NH-(CH₂)ₘ- avec n et m étant indépendamment de 1 à 12 ;
      - les groupes de formule -Xₐ₁-NHC(=O)-NH-Xₐ₁- ou -Xₐ₁-NHC(=O)-NH-Xₐ₁-NHC(=O)-NH-Xₐ₁-, où Xₐ₁ est à chaque occurrence indépendamment tel que défini ci-dessus, en particulier les groupes de formule -(CH₂)ₙ-NHC(=O)-NH-(CH₂)ₘ- avec n et m étant indépendamment de 1 à 12 ;
   X_{b} est choisi parmi :
      - les alcane diyles linéaires et branchés en C₁-C₁₂, en particulier les groupes de formule - (CH₂)ₙ- avec n de 1 à 12, et les alcane triyles branchés en C₁-C₁₂, et les alcène diyles linéaires et branchés en C₂-C₁₂, le groupe X_{b} étant notamment choisi parmi des alcane diyles ou triyles linéaires et branchés en C₁-C₁₂ ; portant optionnellement, notamment en position(s) terminale(s), au moins un groupe -(O-CH₂-CH₂)ₚ- ou -(O-CH₂-C(CH₃)H)ₚ-, avec p étant un entier de 1 à 10 ;
      - les arène diyles et les hétéroarène diyles ;
   X_{b} étant optionnellement substitué par un groupe A de formule (III) suivante : 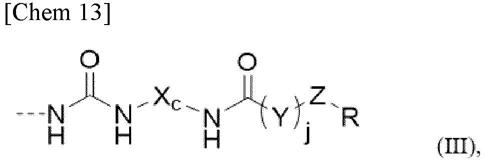
   X_{c}, Y, j, Z et R étant tels que définis ci-dessus ou ci-dessous,
   Z est absent ou choisi parmi les alcane diyles linéaires et branchés en C₁-C₁₂ et les alcène diyles linéaires et branchés en C₂-C₁₂, Z étant en particulier un alcane ou un alcène diyle linéaire en C₂, ledit groupe Z étant optionnellement substitué par un groupe -COOH ;
   R est un groupe aryl ou hétéroaryl substitué par aux moins deux groupes vicinaux choisis parmi - OH et les groupes alcoxy en C₁-C₃, en particulier -OMe, lesdits groupes vicinaux étant plus particulièrement -OH,
   l'un des atomes des groupes de formule (I) portant un groupe B tel que défini précédemment, ce groupe B étant en particulier porté par un atome du groupe X, en particulier X_{b}, des groupes de formule (I).

Selon un mode de réalisation particulier, l'invention concerne une fibre optique telle que définie précédemment, dans laquelle les groupes de formule (I) et les groupes de formule (II) forment ensemble un groupe de formule suivante :

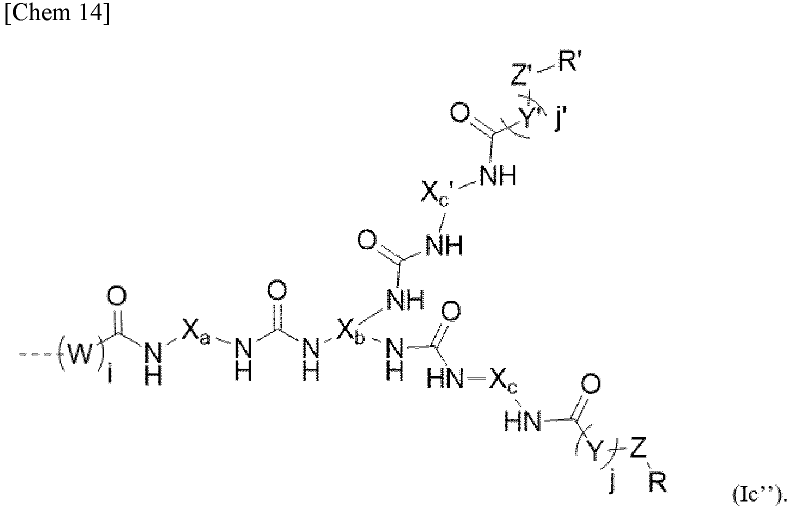

Selon un mode de réalisation particulier, (Y)ⱼZR est choisi parmi les groupes suivants: 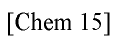 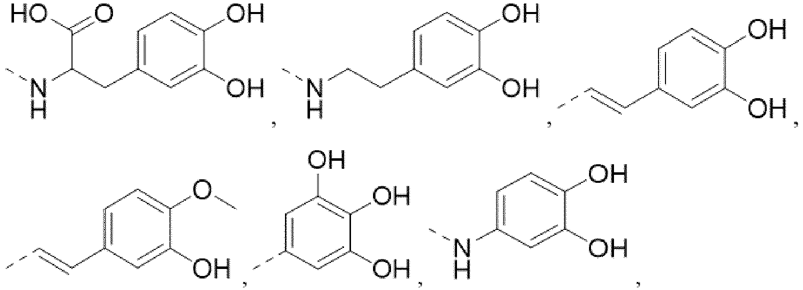 et en particulier parmi les groupes suivants:

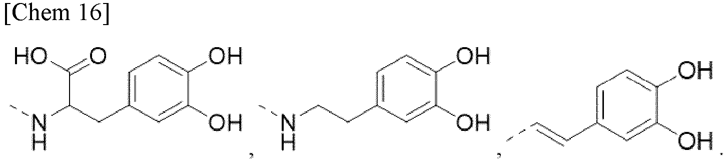

Selon un mode de réalisation particulier, (Y')_{j'}Z'R' est choisi parmi les groupes suivants: 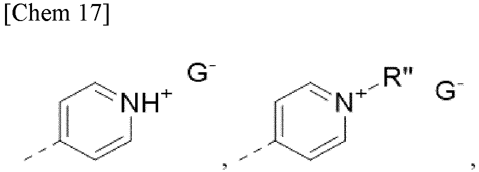 dans lesquels :
G⁻ représente un anion PF₆⁻, un anion triflimidate ([(CF₃SO₂)₂N]⁻) ou un anion halogéné, par exemple Cl⁻, G étant de préférence PF₆⁻ ;
R" représente un alkyle en C1-C3, en particulier un méthyle.

Selon un mode de réalisation particulier, X_{b} et/ou X_{b}' sont choisis parmi les groupes suivants:

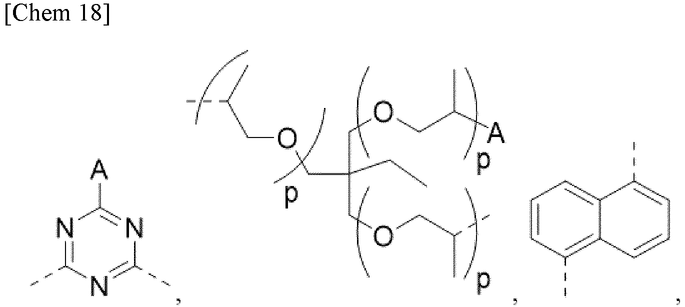

A et p étant tels que défini précédemment.

Selon un mode de réalisation particulier, la fibre optique selon la présente invention est choisie parmi les fibres optiques minérales, en particulier les fibres optiques de silice, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique ; et les fibres optiques portant des chaînes d'oligomères fonctionnels, en particulier des chaînes de PVA, éventuellement partiellement acétylé.

Selon un mode de réalisation particulier, la fibre optique selon la présente invention est choisie parmi les fibres optiques minérales, en particulier les fibres optiques de silice, avec i = 1 et W représentant O, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4, avec i = 1 et W représentant N ; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique, avec i = 0 ; et les fibres optiques portant des chaînes d'oligomères fonctionnels, en particulier des chaînes de PVA, éventuellement partiellement acétylé, avec i = 1 et W représentant O.

Selon un mode de réalisation particulier, l'invention concerne une fibre optique telle que définie précédemment, laquelle est pleine ou creuse, au moins sur ladite partie de sa surface.

Les composés de la présente invention peuvent être préparés par nombre de méthodes bien connues de l'homme de l'art, y compris, mais sans s'y limiter, celles décrites ci-dessous, ou par des modifications de ces méthodes en appliquant des techniques standard connues de l'homme de l'art de la synthèse organique. Les modifications et substitutions appropriées seront facilement apparentes et bien connues ou pourront être facilement obtenues dans la littérature scientifique par l'homme du métier. En particulier, de telles méthodes peuvent être trouvées dans R.C. Larock, Comprehensive Organic Transformations, Wiley-VCH Publishers, 1999.

Tous les procédés divulgués en association avec la présente invention peuvent être réalisés à n'importe quelle échelle, y compris à l'échelle du milligramme, du gramme, du multigramme, du kilogramme, du multikilogramme ou à une échelle industrielle commerciale.

Il sera compris que les composés de la présente invention peuvent contenir un ou plusieurs atomes de carbone substitués de manière asymétrique, et peuvent être isolés sous des formes optiquement actives ou racémiques. Ainsi, toutes les formes chirales, diastéréomères, racémiques, isomères d'une structure sont visées, à moins que la stéréochimie ou la forme isomère spécifique ne soit spécifiquement indiquée. La manière de préparer et d'isoler ces formes optiquement actives est bien connue par l'homme du métier. Par exemple, les mélanges de stéréoisomères peuvent être séparés par des techniques standard comprenant, sans s'y limiter, la résolution de formes racémiques, la chromatographie classique, en phase inverse et chirale, la formation préférentielle de sels, la recristallisation et autres, ou par synthèse chirale, soit à partir de produits de départ chiraux, soit par synthèse ciblée des centres chiraux correspondants.

Les composés de la présente invention peuvent être préparés par une variété de voies de synthèse. Les réactifs et les produits de départ sont disponibles dans le commerce, ou facilement synthétisés par des techniques bien connues de l'homme du métier. Tous les substituants, sauf indication contraire, sont tels que définis précédemment.

Plus particulièrement, les fibres optiques de l'invention, portant une pluralité de groupes de formule (1), comprennent les groupes -NH-C(=O)-NH- (urée), -NH-C(=O)-O- ou -O-C(=O)-NH-(uréthane), et/ou -NH-C(=O)- ou -C(=O)-NH- (amide).

Le groupe -NH-C(=O)-NH- peut être formé par toute méthode bien connue de l'homme du métier, en particulier par mise en contact d'un composé portant un groupe -NH₂ (amine primaire) avec un composé portant un groupe -N=C=O (isocyanate). Cette réaction peut en particulier être effectuée dans un solvant anhydre, notamment un solvant aprotique anhydre, par exemple le diméthylsulfoxyde (DMSO), le tétrahydrofurane (THF), le 1,4-dioxane, l'acétone. Cette réaction peut être effectuée à une température comprise de 15 à 80°C, en particulier de 20 à 60°C, et/ou pendant une durée comprise de 30 minutes à 24 heures, en particulier de 1 à 10 heures.

Le groupe -NH-C(=O)-O- ou -O-C(=O)-NH peut être formé par toute méthode bien connue de l'homme du métier, en particulier par mise en contact d'un composé portant un groupe -OH (alcool primaire) avec un composé portant un groupe -N=C=O (isocyanate), en particulier en présence d'un catalyseur, notamment choisi parmi triéthylamine, 1,4-diazabicyclo[2,2,2]octane (DABCO), 1,5-diazabicyclo[4.3.0]non-5-ène (DBN), dibutyltin dilaurate (DBTDL), 1,8-diazabicylo[5,4,0]undéc-7-ène (DBU), 3,4-dihydro-2H-pyrimido[2,1-b]benzothiazole (DHPB), di-isopropyléthylamine (DIPEA), 4-diméthylaminopyridine (DMAP), 1,8-bis(diméthylamino)naphthalène (DMAN), par exemple la triéthylamine. Cette réaction peut en particulier être effectuée dans un solvant anhydre, notamment un solvant aprotique anhydre, par exemple le diméthylsulfoxyde (DMSO). Cette réaction peut être effectuée à une température comprise de 15 à 80°C, en particulier de 20 à 60°C, et/ou pendant une durée comprise de 30 minutes à 24 heures, en particulier de 1 à 10 heures. Lorsque le groupe -OH est un silanol, notamment d'une fibre optique d'une fibre optique, cette réaction peut en particulier être effectuée à une température comprise de 15 à 30°C, en particulier 20 à 25°C, et/ou pendant une durée comprise de 30 minutes à 2 heures, en particulier 1 heure.

Le groupe NH-C(=O)- ou -C(=O)-NH- peut être formé par toute méthode bien connue de l'homme du métier, en particulier par mise en contact d'un composé portant un groupe -COOH (acide carboxylique) avec un composé portant un groupe -N=C=O (isocyanate), en particulier en présence d'un catalyseur, notamment choisi parmi triéthylamine, 1,4-diazabicyclo[2,2,2]octane (DABCO), 1,5-diazabicyclo[4.3.0]non-5-ène (DBN), dibutyltin dilaurate (DBTDL), 1,8-diazabicylo[5,4,0]undéc-7-ène (DBU), 3,4-dihydro-2H-pyrimido[2,1-b]benzothiazole (DHPB), di-isopropyléthylamine (DIPEA), 4-diméthylaminopyridine (DMAP), 1,8-bis(diméthylamino)naphthalène (DMAN), par exemple la triéthylamine. Cette réaction peut en particulier être effectuée dans un solvant anhydre, notamment un solvant aprotique anhydre, par exemple le diméthylsulfoxyde (DMSO). Cette réaction peut être effectuée à une température comprise de 15 à 80°C, en particulier de 20 à 60°C, et/ou pendant une durée comprise de 30 minutes à 24 heures, en particulier de 1 à 10 heures.

Selon un autre aspect, l'invention concerne également un procédé de préparation d'une fibre optique telle que définie précédemment, comprenant l'étape suivante :
(i) La mise en contact d'au moins une partie de la surface d'une fibre optique portant des groupes -OH, -NH₂ ou -COOH, avec :
   - un composé (A) de formule suivante : 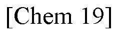 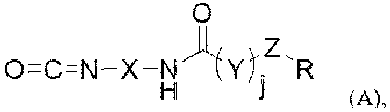 dans laquelle X, Y, j, Z et R sont tels que définis précédemment, et
   - un composé (A') de formule suivante : 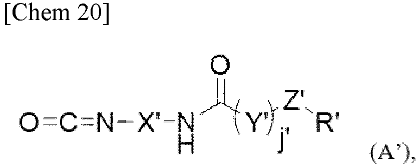 dans laquelle X', Y', j', Z' et R' sont tels que définis précédemment.

Par « fibre optique portant des groupes -OH, -NH₂ ou -COOH », on entend notamment que la fibre optique porte directement à sa surface des groupes -OH, -NH₂ ou -COOH, ou que la fibre est fonctionnalisée par des groupes portant eux-mêmes un ou plusieurs groupes -OH, -NH₂ ou - COOH.

Lorsque la fibre optique porte des groupes -OH, i = 1 et W représente -O-.

Lorsque la fibre optique porte des groupes -NH₂, i = 1 et W représente -NH-.

Lorsque la fibre optique porte des groupes -COOH, i = 0.

Selon un mode de réalisation particulier, la fibre optique selon la présente invention est choisie parmi les fibres optiques minérales, en particulier les fibres optiques de silice, avec i = 1 et W représentant O, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4, avec i = 1 et W représentant N ; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique, avec i = 0 ; et les fibres optiques portant des chaînes d'oligomères fonctionnels, en particulier des chaînes de PVA, éventuellement partiellement acétylé, avec i = 1 et W représentant O.

Selon un autre aspect, l'invention concerne également un procédé de préparation d'une fibre optique telle que définie précédemment, comprenant, lorsque W=W', i=i' et X=X', les étapes suivantes :
(i') la mise en contact d'au moins une partie de la surface d'une fibre optique portant des groupes -OH, -NH₂ ou -COOH, avec un composé (B) de formule suivante :
   [Chem 21]

   O=C=N-X-N=C=O (B),

   dans laquelle X est tel que défini précédemment,
   pour obtenir une fibre optique portant sur au moins une partie de sa surface une pluralité de groupes de formule (C) suivante : 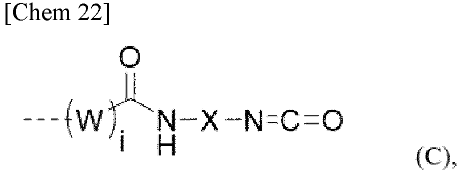
   dans laquelle W, i et X sont tels que définis précédemment,
(ii') la mise en contact de la fibre obtenue à l'étape précédente (i') avec :
   - un composé de formule (D) suivante : 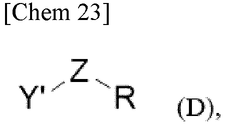
      dans laquelle Z et R sont tels que définis précédemment,
      et dans laquelle Y' est :
         - un groupe -NH₂ lorsque j = 1 et Y est -NH- ;
         - un groupe -OH lorsque j = 1 et Y est -O- ;
         - un groupe -COOH lorsque j = 0 ;
            et
         - un composé de formule (D') suivante : 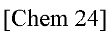 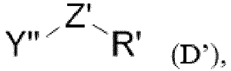
            dans laquelle Z' et R' sont tels que définis précédemment,
            et dans laquelle Y" est :
               - un groupe -NH₂ lorsque j' = 1 et Y' est -NH- ;
               - un groupe -OH lorsque j' = 1 et Y' est -O- ;
               - un groupe -COOH lorsque j' = 0.

Par « fibre optique portant des groupes -OH, -NH₂ ou -COOH », on entend notamment que la fibre optique porte directement à sa surface des groupes -OH, -NH₂ ou -COOH, ou que la fibre est fonctionnalisée par des groupes portant eux-mêmes un ou plusieurs groupes -OH, -NH₂ ou - COOH.

Lorsque la fibre optique porte des groupes -OH, i = 1 et W représente -O-.

Lorsque la fibre optique porte des groupes -NH₂, i = 1 et W représente -NH-.

Lorsque la fibre optique porte des groupes -COOH, i = 0.

Les étapes définies précédemment sont optionnellement réalisées en présence d'un catalyseur, notamment choisi parmi triéthylamine, 1,4-diazabicyclo[2,2,2]octane (DABCO), 1,5-diazabicyclo[4.3.0]non-5-ène (DBN), dibutyltin dilaurate (DBTDL), 1,8-diazabicylo[5,4,0]undéc-7-ène (DBU), 3,4-dihydro-2H-pyrimido[2,1-b]benzothiazole (DHPB), di-isopropyléthylamine (DIPEA), 4-diméthylaminopyridine (DMAP), 1,8-bis(diméthylamino)naphthalène (DMAN), par exemple la triéthylamine, de préférence lorsque un groupe uréthane ou amide est formé.

Les étapes définies précédemment sont en particulier réalisées dans un solvant anhydre, notamment un solvant aprotique anhydre, par exemple le diméthylsulfoxyde (DMSO), le tétrahydrofurane (THF), le 1,4-dioxane, l'acétone.

Les étapes définies précédemment sont en particulier réalisées à une température comprise de 15 à 80°C, en particulier de 20 à 60°C, et/ou pendant une durée comprise de 30 minutes à 24 heures, en particulier de 1 à 10 heures.

Selon un mode de réalisation particulier, les composés de formule (A) et les composés de formule (A') sont, lors de l'étape (i) mis en contact de ladite au moins une partie de la surface d'une fibre optique de manière simultanée.

Selon un mode de réalisation particulier, les composés de formule (A) et les composés de formule (A') sont, dans le cadre de l'étape (i), en proportions stœchiométriques.

Selon un mode de réalisation particulier, une composition comprenant les composés de formule (A) et les composés de formule (A'), en proportions stœchiométriques, et optionnellement en sus, un solvant, est, lors de l'étape (i), mise en contact de ladite au moins une partie de la surface d'une fibre optique.

Les composés de formule (A), mis en contact avec les composés de formule (A'), en particulier en proportions stœchiométriques, forment avec ces derniers des complexes (des intermédiaires ioniques) entre la sonde d'un composé de formule (A) et le cation organique d'un composé de formule (A').

Ces complexes intermédiaires sont susceptibles de permettre le positionnement automatique du cation organique non loin de la sonde après le greffage sur la fibre optique.

Selon un mode de réalisation particulier, les composés de formule (D) et les composés de formule (D') sont, lors de l'étape (ii') mis en contact de ladite au moins une partie de la surface d'une fibre optique de manière simultanée.

Selon un mode de réalisation particulier, les composés de formule (D) et les composés de formule (D') sont, dans le cadre de l'étape (ii'), en proportions stœchiométriques.

Selon un mode de réalisation particulier, une composition comprenant les composés de formule (D) et les composés de formule (D'), en proportions stœchiométriques, et optionnellement en sus, un solvant, est, lors de l'étape (ii'), mise en contact de ladite au moins une partie de la surface d'une fibre optique.

Selon un autre aspect, l'invention concerne également un procédé de préparation d'une fibre optique telle que définie précédemment, comprenant, les étapes suivantes :
(i") la mise en contact d'au moins une partie de la surface d'une fibre optique portant des groupes -OH, -NH₂ ou -COOH, avec un composé (B) de formule suivante :
   [Chem 25]

   O=C=N-Xₐ-N=C=O (B),

   dans laquelle Xₐ est tel que défini précédemment,
   pour obtenir une fibre optique portant sur au moins une partie de sa surface une pluralité de groupes de formule (C) suivante : 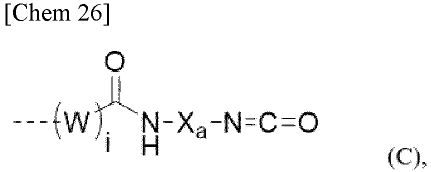
   dans laquelle W, i et Xₐ sont tels que définis précédemment,
(ii") la mise en contact de la fibre obtenue à l'étape précédente (i') avec :
   - un composé de formule (D") suivante : 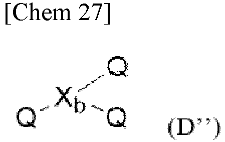 Où Q est NH₂, OH ou COOH, et X_{b} est tel que défini précédemment,
(iii") la mise en contact de la fibre obtenue à l'étape précédente (ii') avec :
   - un composé de formule (IIIₒ) suivante : 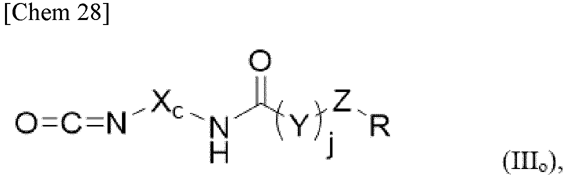
   - et un composé de formule (IIIₒ') suivante : 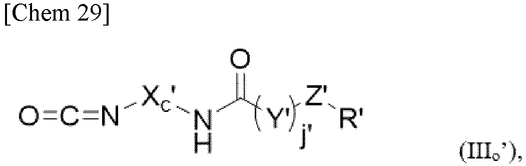 X_{c}, X_{c}', Y, Y', j, j', Z, Z', R et R' étant tels que définis ci-dessus ou ci-dessous.

Selon un autre aspect, l'invention concerne également l'utilisation d'une fibre optique telle que définie précédemment, pour mesurer la concentration en un ion monovalent, en particulier en un ion de métal alcalin, plus particulièrement en ion lithium.

Selon un mode de réalisation particulier, la présente invention concerne une utilisation tel que définie précédemment, pour mesurer la concentration en ion lithium dans une batterie Li-ion, en particulier au sein de l'électrolyte de ladite batterie.

Selon un autre aspect, l'invention concerne également un procédé de mesure de la concentration en un ion monovalent, en particulier en un ion de métal alcalin, plus particulièrement en ion lithium, comprenant les étapes suivantes :
(i) Une étape de mise en contact des groupes A et B portés par au moins une partie de la surface de la fibre optique telle que définie précédemment avec le milieu dans lequel la concentration en ion monovalent est à mesurer ;
(ii) Une étape d'excitation par transmission de lumière dans ladite fibre optique ;
(iii) Une étape de mesure de la fluorescence émise et transmise par ladite fibre optique.

Selon un mode de réalisation particulier, dans lequel la lumière de l'étape (ii) est une lumière UV ou une lumière visible violette, et a en particulier une longueur d'onde comprise de 350 à 450 nm.

La présence d'une ou plusieurs fonctions urée, notamment aliphatiques ou liée à des cycles aromatiques ou hétéroaromatiques, uréthane liée à des cycles aromatiques ou hétéroaromatiques et/ou amide liée à des cycles aromatiques ou hétéroaromatiques, de par leur fluorescence propre, permet de générer lors de la fluorescence un pic de référence, insensible à la présence ou non de lithium.

Lorsque ladite au moins une partie de la surface est par exemple située en bout de fibre, la mesure de la fluorescence peut se faire par réflectance (figure 1, cas 1).

Lorsque ladite au moins une partie de la surface est par exemple située le long de la fibre, des points de mesure par onde évanescente peuvent être crées. Dans ce cas, la mesure peut se faire par transmittance à travers la fibre, l'excitation étant envoyée à une extrémité et la mesure se faisant à l'autre extrémité. Il est aussi possible de faire une mesure par réflectance, mais dans ce cas, il est préférable d'ajouter en bout de fibre un dépôt réflecteur afin de maximiser la réflectance (figure 1, cas 2).

### Définitions

Tel qu'on l'entend ici, les plages de valeur sous forme de « x-y » ou « de x à y » ou « entre x et y » incluent les bornes x et y ainsi que les entiers compris entre ces bornes. A titre d'exemple, « 1-5 », ou « de 1 à 5 » ou « entre 1 et 5 » désignent les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'il est utilisé ici, le terme "alkyle" désigne un groupe alkyle à chaîne linéaire ou ramifiée, en particulier linéaire, ayant le nombre d'atomes de carbone indiqué avant ledit terme, notamment 1 à 4 atomes de carbone, tel que méthyle, éthyle, propyle, isopropyle, butyle, isobutyle, sec-butyle, tert-butyle, etc. Ainsi, une expression telle que "alkyle en C1-C3" désigne un radical alkyle contenant de 1 à 3 atomes de carbone.

Il en est de même pour le terme « alcane ».

Par « diyle », on entend en particulier un résidu lié à deux groupes par une liaison simple entre le résidu et chacun de ces deux groupes.

Tel qu'utilisé ici, le terme "arène" désigne un système cyclique aromatique hydrocarboné mono- ou bicyclique, substitué ou non substitué, ayant 6 à 10 atomes de carbone dans le cycle. Les exemples incluent le benzène et le naphtalène. Les arènes préférés comprennent le benzène et le naphtalène non substitués ou substitués. Sont inclus dans la définition d'"arène" les systèmes cycliques condensés, y compris, par exemple, les systèmes cycliques dans lesquels un cycle aromatique est condensé à un cycle cycloalkyle. Les exemples de tels systèmes cycliques condensés comprennent, par exemple, l'indane, l'indène et le tétrahydronaphtalène.

Tel qu'il est utilisé ici, le terme "hétéroarène" désigne un système aromatique cyclique contenant 5 à 10 atomes de carbone dans lequel un ou plusieurs atomes de carbone du cycle sont remplacés par au moins un hétéroatome tel que -O-, -N- ou -S-, en particulier -N- et/ou -O-. Les exemples d'hétéroarènes comprennent pyrrole, furane, thiophène, pyrazole, imidazole, thiazole, isothiazole, isoxazole, oxazole, oxathiol, oxadiazole, triazole, oxatriazole, furazane, tétrazole, pyridine, pyrazine, pyrimidine, pyridazine, triazine, indole, isoindole, indazole, benzofurane, isobenzofurane, purine, quinazoline, quinoline, isoquinoline, benzoimidazole, benzothiazole, benzothiophène, thianaphtène, benzoxazole, benzisoxazole, cinnoline, phtalazine, naphtyridine et quinoxaline. Sont inclus dans la définition d'"hétéroarène" les systèmes cycliques condensés, y compris, par exemple, les systèmes cycliques dans lesquels un cycle aromatique est condensé à un cycle hétérocycloalkyle. Les exemples de tels systèmes cycliques fusionnés comprennent, par exemple, le phtalamide, l'anhydride phtalique, l'indoline, l'isoindoline, la tétrahydroisoquinoline, le chromane, l'isochromane, le chromène et l'isochromène.

### FIGURES

La figure 1 correspond aux mesures de fluorescence à l'aide d'une fibre optique selon l'invention telles que décrites dans l'exemple 3.

### EXEMPLES

Exemple 1 : Préparation d'une fibre optique de silice fonctionnalisée selon l'invention La densité de groupes silanols à la surface d'un verre peut être estimée à 5 groupes par nm carré. Il peut également être estimé que de façon générale, environ 10% de ces sites sont susceptibles d'être greffés.

Ainsi, la concentration des réactifs à mettre en œuvre peut être déterminée en connaissant la section du cœur optique de la fibre de verre à fonctionnaliser.

De façon générale, les synthèses se font dans le DMSO anhydre. Toujours de façon générale, tout ce qui n'est pas greffé par une liaison covalente est éliminé par un rinçage dans le DMSO, puis par un rinçage dans un mélange éthylène carbonate/diéthylène carbonate. Ces rinçages permettent d'éliminer toutes les impuretés adsorbées à la surface de la fibre optique.

Les surfaces hydroxylées ont tout d'abord été déshydratées. Ceci peut par exemple se faire à 150°C dans du DMSO anhydre sous balayage d'argon. 2 heures suffisent généralement à éliminer l'eau.

En outre, dans 50ml de DMSO anhydre, on ajoute 0,1 molaire de 4-aminopyridine puis 0,1 molaire de diisocyanate hexane. Le milieu réactionnel est laissé sous agitation 3 heures à 50°C. A température ambiante, on ajoute 0,1 molaire d'une solution 1M d'HCl dans l'éther éthylique pour former le cation pyridinium. L'éther éthylique est évaporé à 50°C sous courant d'argon.

Par ailleurs, dans 50ml de DMSO anhydre, est ajouté 0,1 molaire de 3,4-dihydroxy-L-Phénylalanine, puis 0,1 molaire de diisocyanate hexane. Le milieu réactionnel est laissé sous agitation 3 heures à 50°C.

Alternativement :
- dans 50ml DMSO anhydre, est ajouté 0,1 molaire de dopamine hydrochloride . Le mélange est alors transféré sur un fritté à inversion contenant 1,5g de NaOH perle (Alfa Aesar) préalablement séché 5H sous vide primaire à 50°C et conditionné sous argon. La solution est laissée 5 minutes au contact de la soude puis filtrée. Le filtrat obtenu contient, dans le DMSO anhydre, de la dopamine. Le filtrat est conservé à l'abri de la lumière, puis est ajouté ensuite 0,08 molaire de diisocyanate hexane. Le milieu réactionnel est alors laissé sous agitation 3 heures à 50°C ;
- dans 50ml de DMSO anhydre, est ajouté 0,1 molaire d'acide caféique, puis 0,1 molaire de diisocyanate hexane et 0,01 molaire de triéthylamine. Le milieu réactionnel est ensuite laissé sous agitation 5 heures à 50°C.

Enfin, on ajoute 1/2 molaire du greffon cation organique et 1/2 molaire d'un greffon catéchols dans le DMSO pur, avant mise en contact avec la surface préparée comme indiqué plus haut pour obtenir le produit de l'invention.

Exemple 2 : Préparation d'une autre fibre optique de silice fonctionnalisée selon l'invention Les surfaces hydroxylées de la fibre optique ont tout d'abord été déshydratées. Ceci peut par exemple se faire à 150°C dans du DMSO anhydre sous balayage d'argon. 2 heures suffisent généralement à éliminer l'eau.

On trempe cette fibre dans 20ml d'une solution de DMSO anhydre 0,1M de diisocyanate hexane, on ajoute 1ml de triethylamine dans le DMSO anhydre. La fibre est laissée dans le milieu réactif pendant 3H à 50°C. On lave abondamment la fibre greffée avec du DMSO anhydre pour retirer les produits non greffés.

On stocke la fibre dans le DMSO anhydre pour l'étape suivante.

La fibre greffée est trempée dans 20ml d'une solution 0,1M de 1,3,5-triamine-2,4,6-triamine dans le DMSO anhydre. La fibre est laissée dans le milieu réactif 3H à 50°C. On lave abondamment la fibre greffée avec du DMSO anhydre pour retirer les produits non greffés. On stocke la fibre dans le DMSO anhydre pour l'étape suivante.

Parallèlement, on a préparé une solution 0,1M de cation pyridinium dans le DMSO anhydre (la description de la synthèse du cation pyridinium est donnée dans l'exemple 1) et une solution d'acide caféique portant un isocyanate réactif 0,1M dans le DMSO anhydre (la description de la synthèse de l'acide caféique portant un isocyanate réactif est également donnée dans l'exemple1). On fait un mélange en prenant 10ml de chacune des solutions. La fibre portant un greffon mélamine pendant est plongée pendant 3 h à 50°C dans le mélange.

On lave abondamment la fibre greffée avec du DMSO anhydre pour retirer les produits non greffés.

Puis elle est à nouveau lavée avec un mélange de carbonates organiques anhydres et finalement stockée dans ce milieu.

Les fibres fonctionnalisées comme suit ont été obtenues selon ce mode opératoire :

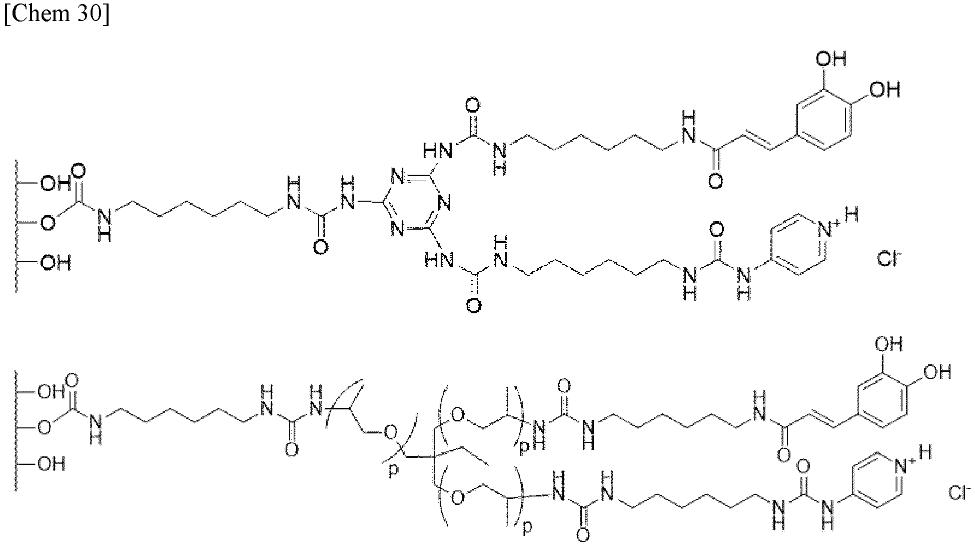

### Exemple 3 : mesures de fluorescence

Les mesures de fluorescence, spectre d'émission et spectre d'excitation, ont été enregistrés avec un spectromètre Horiba Jobin Yvon model Fluorolog-3 model FL3-22 ayant le détecteur R928 Hamamatsu et une lampe de Xenon à 450W comme source d'excitation.

Le spectre d'émission est obtenu en excitant l'échantillon avec une longueur d'onde absorbée, généralement le pic d'absorption (ou d'excitation) d'intensité maximale. Le monochromateur d'émission balaie la luminescence dans un intervalle de longueur d'onde. Les paramètres les plus importants sont i) la longueur d'onde d'excitation et ii) la largeur des fentes. Les spectres d'émission ont été corrigés pour tenir compte de la réponse spectrale des monochromateurs et du détecteur, à l'aide des spectres de correction typiques fournis par le fabricant.

Le spectre d'excitation est mesuré en fixant le monochromateur d'émission à une longueur d'onde d'émission donnée (par exemple celle correspondant au maximum du spectre d'émission). Le monochromateur d'excitation est ensuite balayé dans un intervalle de longueur d'onde donnée et l'intensité de la luminescence correspondant à la longueur d'onde d'émission surveillée est mesurée. Les paramètres les plus importants sont i) la longueur d'onde de surveillance et ii) la largeur des fentes. Les spectres d'excitation ont été corrigés de 240 à 600 nm pour la distribution spectrale de l'intensité de la lampe en utilisant un détecteur de référence à photodiode de silicium.

Pour évaluer la sensibilité du capteur à la concentration en lithium, le spectre d'émission et d'excitation de la molécule « sonde » en solution (EC+DEC) été mesuré. C'est une mesure de référence. Ensuite différentes concentrations de lithium en solution (EC+DEC+LiPF6) ont été additionnés à la solution de référence/initiale et les spectres d'émission et excitation enregistrés pour chaque concentration.

Pour la sonde à base de dopamine le spectre d'émission a été mesuré en excitant à un longueur d'onde de 320 nm et avec des fentes de 1.5mm pour le spectromètre d'émission et fentes de 0.3 mm pour le spectromètre d'excitation. Le spectre d'excitation a été mesuré en monitorant à un longueur d'onde de 360 nm et avec des fentes de 0.4mm pour le spectromètre d'émission et fentes de 0.8 mm pour le spectromètre d'excitation.

Pour la sonde à base de mélanine le spectre d'émission a été mesuré en excitant à un longueur d'onde de 350 nm et avec des fentes de 1.5 mm pour le spectromètre d'émission et fentes de 0.3 mm pour le spectromètre d'excitation.

Cet exemple a été obtenu avec des fibres optiques avec greffage des molécules sondes en bout de fibre, pour une mesure par réflectance, tel que notamment présenté à la figure 1, cas 1.

Il est également possible de greffer les molécules le long de la fibre sur des zones où la gaine a été retirée afin de créer des points de mesure par onde évanescente, tel que notamment présenté à la figure 1, cas 2. Dans ce cas, la mesure se fait par transmittance à travers la fibre. L'excitation est envoyée à une extrémité et la mesure se fait à l'autre extrémité. Il est aussi possible dans le cas 2 de faire une mesure par réflectance, mais dans ce cas il est préférable d'ajouter en bout de fibre un dépôt réflecteur afin de maximiser la réflectance.

## Revendications

1. Fibre optique portant sur au moins une partie de sa surface une pluralité de groupes A, et une pluralité de groupes B,
les groupes A portant un groupe R étant un groupe aryl ou hétéroaryl substitué par aux moins deux groupes vicinaux choisis parmi -OH et les groupes alcoxy en C₁-C₃, en particulier -OMe, lesdits groupes vicinaux étant plus particulièrement -OH,
les groupes B portant un groupe R' étant un cation organique.

2. Fibre optique selon la revendication 1, dans laquelle :
- la pluralité de groupes A et la pluralité de groupes B sont directement portés par ladite au moins une partie de sa surface ; ou
- les groupes A sont substitués par au moins un groupe B, en particulier par un groupe B.

3. Fibre optique selon l'une quelconque des revendications précédentes, dans laquelle :
- le groupe R est choisi parmi les groupes suivants: 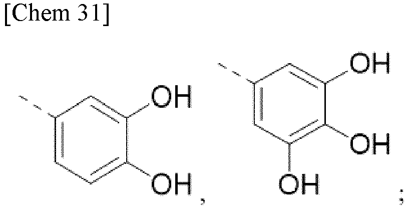 et/ou
- le groupe R' est choisi parmi les ammoniums quaternaires et les cations hétéroaromatiques, en particulier les cations aza-hétéroaromatiques,
le groupe R' étant en particulier choisi parmi les groupes suivants: 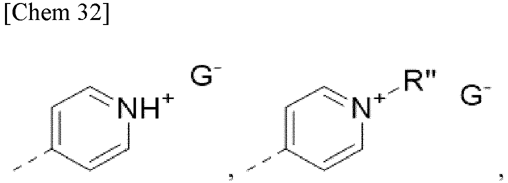 dans lesquels :
G⁻ représente un anion PF₆⁻, un anion triflimidate ([(CF₃SO₂)₂N]⁻) ou un anion halogéné, par exemple Cl⁻, G étant de préférence PF₆⁻ ;
R" représente un alkyle en C1-C3, en particulier un méthyle.

4. Fibre optique selon l'une quelconque des revendications précédentes, dans laquelle les groupes A et/ou B sont des chaînes portant respectivement le groupe R ou R', en particulier en position terminale, ces chaînes étant indépendamment choisies parmi les chaînes alkyles ou alcényles linéaires ou branchés, lesquelles sont optionnellement interrompues par un ou des atomes ou groupes choisis parmi -NH-, O, S, urée, uréthane, amide, ester, les arène diyles et les hétéroarènes diyles.

5. Fibre optique selon l'une quelconque des revendications précédentes, dans laquelle les groupes (A) sont de formule (I) suivante, et les groupes (B) sont de formule (I') suivante : 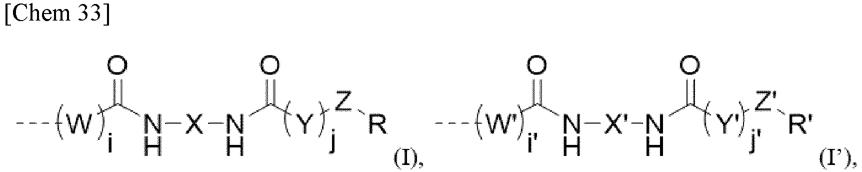 dans lesquelles :
W, W', Y et Y' sont indépendamment choisis parmi O et NH ;
i, i', j et j' sont indépendamment choisis parmi 0 et 1 ;
X représente un groupe de formule (II) suivante : 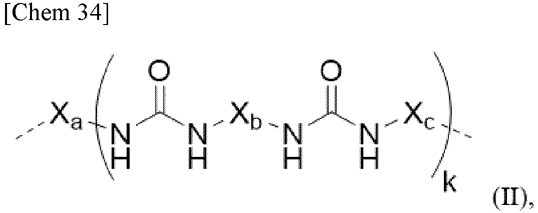
X' représente un groupe de formule (II') suivante : 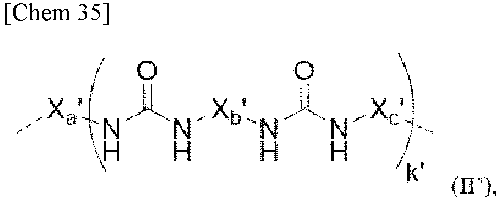 dans lesquelles :
k et k' sont indépendamment choisis parmi 0 et 1 ;
Xₐ, Xₐ', X_{c} et X_{c}' sont indépendamment choisis choisi parmi :
- les groupes Xₐ₁ étant des alcane diyles linéaires et branchés en C₁-C₁₂, en particulier les groupes de formule -(CH₂)ₙ- avec n de 1 à 12, ou des alcène diyles linéaires et branchés en C₂-C₁₂, les groupes Xₐ₁ étant notamment des alcane diyles linéaires et branchés en C₁-C₁₂ ;
- les groupes de formule -Xₐ₁-NH-Xₐ₁-, où Xₐ₁ est à chaque occurrence indépendamment tel que défini ci-dessus, en particulier les groupes de formule -(CH₂)ₙ-NH-(CH₂)ₘ- avec n et m étant indépendamment de 1 à 12 ;
- les groupes de formule -Xₐ₁-NHC(=O)-NH-Xₐ₁- ou -Xₐ₁-NHC(=O)-NH-Xₐ₁-NHC(=O)-NH-Xₐ₁-, où Xₐ₁ est à chaque occurrence indépendamment tel que défini ci-dessus, en particulier les groupes de formule -(CH₂)ₙ-NHC(=O)-NH-(CH₂)ₘ- avec n et m étant indépendamment de 1 à 12 ;
X_{b} et X_{b}' sont indépendamment choisis parmi :
- les alcane diyles linéaires et branchés en C₁-C₁₂, en particulier les groupes de formule - (CH₂)ₙ- avec n de 1 à 12, les alcane triyles branchés en C₁-C₁₂, et les alcène diyles linéaires et branchés en C₂-C₁₂, les groupes X_{b} et X_{b}' étant notamment des alcane diyles ou triyles linéaires et branchés en C₁-C₁₂ ; portant optionnellement, notamment en position(s) terminale(s), au moins un groupe -(O-CH₂-CH₂)ₚ- ou -(O-CH₂-C(CH₃)H)ₚ-, avec p étant un entier de 1 à 10 ;
- les arène diyles et les hétéroarène diyles ;
X_{b} étant optionnellement substitué par un groupe A de formule (III) suivante : 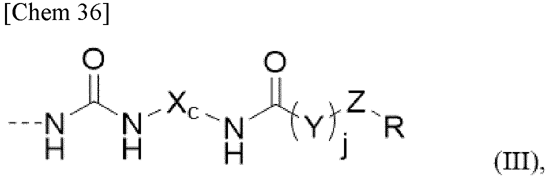
X_{c}, Y, j, Z et R étant tels que définis ci-dessus ou ci-dessous,
X_{b}' étant optionnellement substitué par un groupe A de formule (III') suivante : 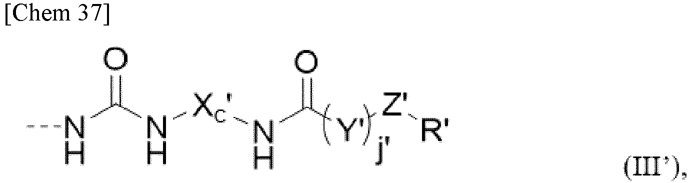
X_{c}', Y', j', Z' et R' étant tels que définis ci-dessus ou ci-dessous,
Z et Z' étant indépendamment absents ou choisis parmi les alcane diyles linéaires et branchés en C₁-C₁₂ et les alcène diyles linéaires et branchés en C₂-C₁₂, Z étant en particulier un alcane ou un alcène diyle linéaire en C₂, ledit groupe Z étant optionnellement substitué par un groupe -COOH ; R et R' sont tels que définis dans la revendication 1,
ladite fibre optique étant en particulier une fibre optique dans laquelle :
- les groupes de formule (I) sont choisi parmi les groupes de formule suivante : 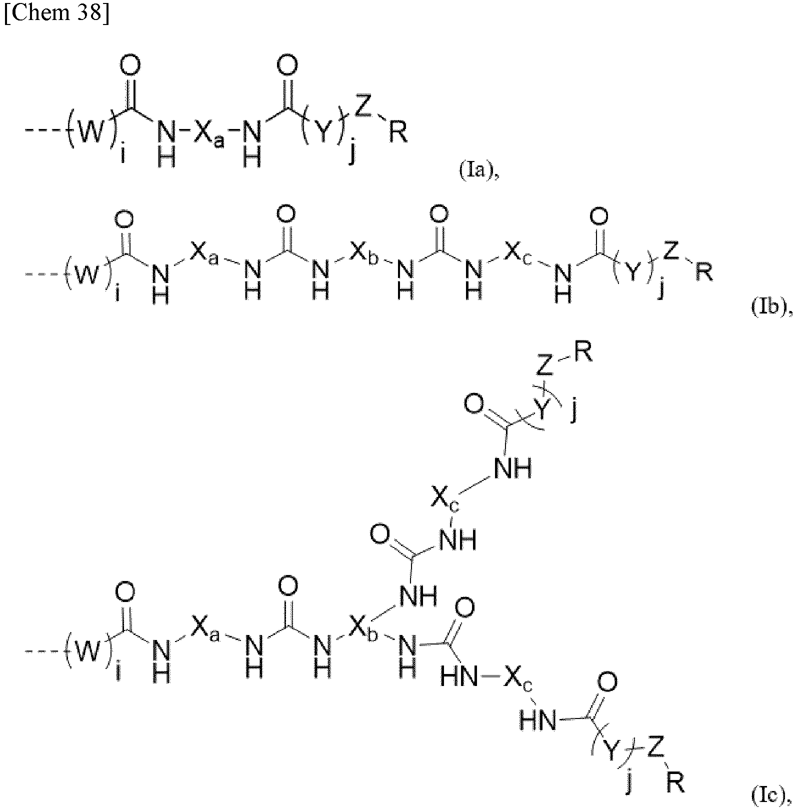 et/ou
- les groupes de formule (1') sont choisi parmi les groupes de formule suivante :

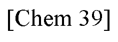

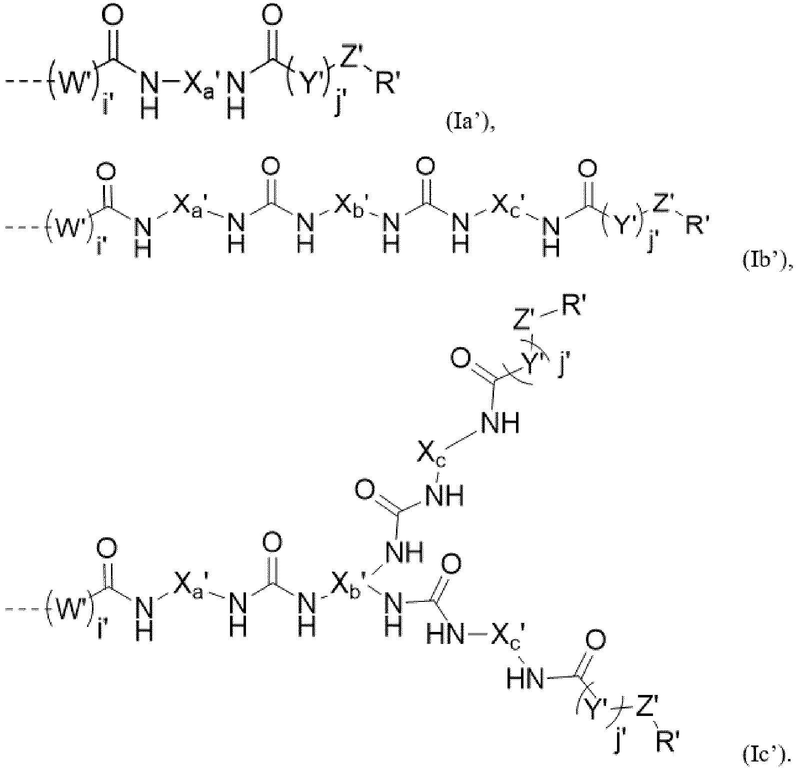

6. Fibre optique selon l'une quelconque des revendications précédentes, dans laquelle les groupes de formule (I) et les groupes de formule (II) forment ensemble un groupe de formule suivante : 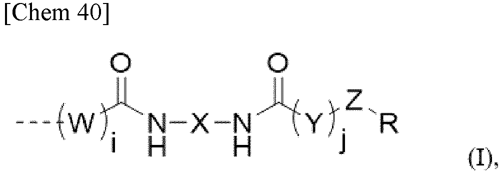 dans laquelle :
W et Y sont indépendamment choisis parmi O et NH ;
i et j sont indépendamment choisis parmi 0 et 1 ;
X représente un groupe de formule (II) suivante : 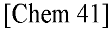 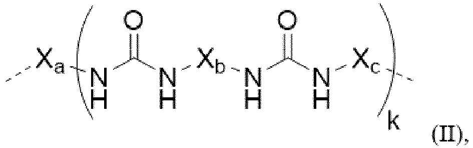 dans laquelle :
k est choisi parmi 0 et 1 ;
Xₐ et X_{c} sont indépendamment choisis choisi parmi :
- les groupes Xₐ₁ étant des alcane diyles linéaires et branchés en C₁-C₁₂, en particulier les groupes de formule -(CH₂)ₙ- avec n de 1 à 12, ou des alcène diyles linéaires et branchés en C₂-C₁₂, les groupes Xₐ₁ étant notamment des alcane diyles linéaires et branchés en C₁-C₁₂ ;
- les groupes de formule -Xₐ₁-NH-Xₐ₁-, où Xₐ₁ est à chaque occurrence indépendamment tel que défini ci-dessus, en particulier les groupes de formule -(CH₂)ₙ-NH-(CH₂)ₘ- avec n et m étant indépendamment de 1 à 12 ;
- les groupes de formule -Xₐ₁-NHC(=O)-NH-Xₐ₁- ou -Xₐ₁-NHC(=O)-NH-Xₐ₁-NHC(=O)-NH-Xₐ₁-, où Xₐ₁ est à chaque occurrence indépendamment tel que défini ci-dessus, en particulier les groupes de formule -(CH₂)ₙ-NHC(=O)-NH-(CH₂)ₘ- avec n et m étant indépendamment de 1 à 12 ;
X_{b} est choisi parmi :
- les alcane diyles linéaires et branchés en C₁-C₁₂, en particulier les groupes de formule - (CH₂)ₙ- avec n de 1 à 12, les alcane triyles branchés en C₁-C₁₂, et les alcène diyles linéaires et branchés en C₂-C₁₂, les groupes X_{b} et X_{b}' étant notamment des alcane diyles ou triyles linéaires et branchés en C₁-C₁₂ ; portant optionnellement, notamment en position(s) terminale(s), au moins un groupe -(O-CH₂-CH₂)ₚ- ou -(O-CH₂-C(CH₃)H)ₚ-, avec p étant un entier de 1 à 10 ;
- les arène diyles et les hétéroarène diyles ;
X_{b} étant optionnellement substitué par un groupe A de formule (III) suivante : 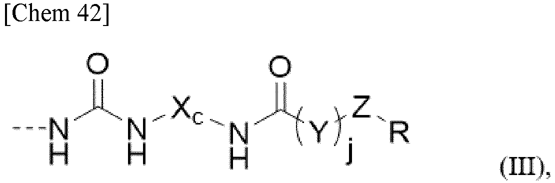
X_{c}, Y, j, Z et R étant tels que définis ci-dessus ou ci-dessous,
Z est absent ou choisi parmi les alcane diyles linéaires et branchés en C₁-C₁₂ et les alcène diyles linéaires et branchés en C₂-C₁₂, Z étant en particulier un alcane ou un alcène diyle linéaire en C₂, ledit groupe Z étant optionnellement substitué par un groupe -COOH ;
R est un groupe aryl ou hétéroaryl substitué par aux moins deux groupes vicinaux choisis parmi - OH et les groupes alcoxy en C₁-C₃, en particulier -OMe,
l'un des atomes des groupes de formule (I) portant un groupe B tel que défini à la revendication 1, ce groupe B étant en particulier porté par un atome du groupe X, en particulier X_{b}, des groupes de formule (1),
ladite fibre optique étant en particulier une fibre optique dans laquelle les groupes de formule (I) et les groupes de formule (II) forment ensemble un groupe de formule suivante :

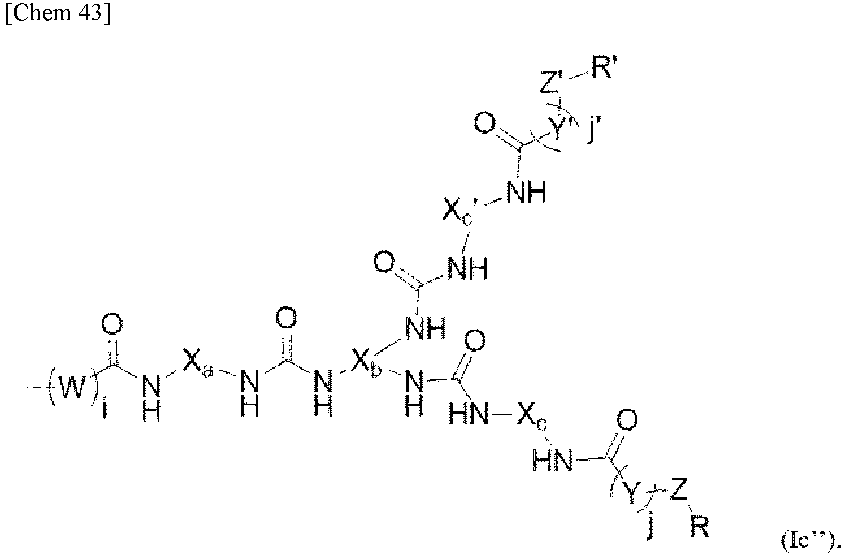

7. Fibre optique selon la revendication 5 ou 6, dans laquelle :
- (Y)ⱼZR est choisi parmi les groupes suivants: 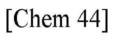 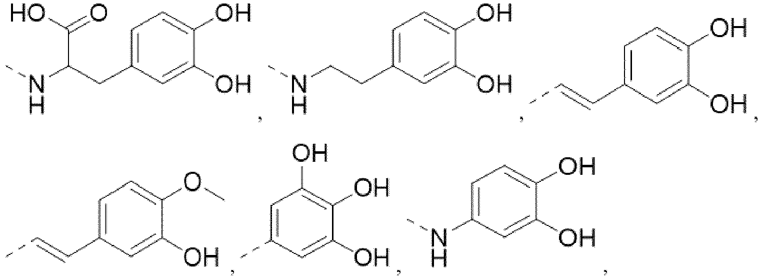 et en particulier parmi les groupes suivants: 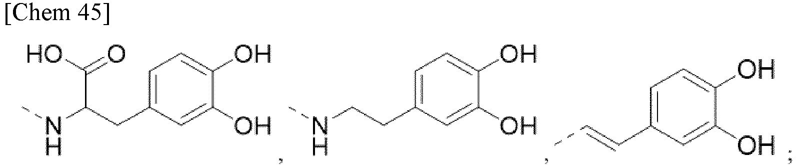 et/ou
- (Y')_{j'}Z'R' est choisi parmi les groupes suivants: 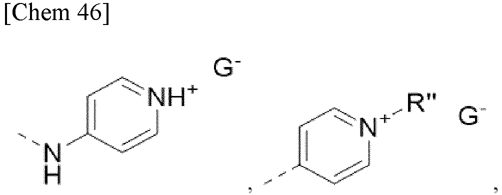 dans lesquels :
G⁻ représente un anion PF₆⁻, un anion triflimidate ([(CF₃SO₂)₂N]⁻) ou un anion halogéné, par exemple Cl⁻, G étant de préférence PF₆⁻ ;
R' représente un alkyle en C1-C3, en particulier un méthyle.

8. Fibre optique selon l'une quelconque des revendications 5 à 7, dans laquelle X_{b} et/ou X_{b}' sont choisis parmi les groupes suivants: 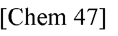 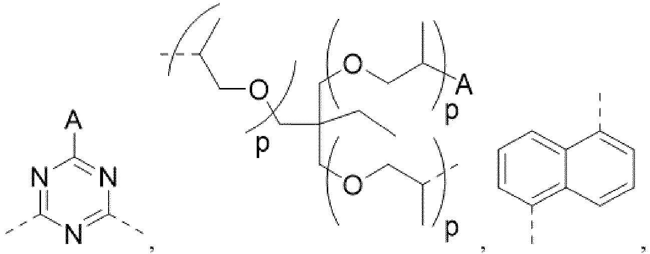 A et p étant tels que défini dans la revendication 5.

9. Fibre optique selon l'une quelconque des revendications précédentes, laquelle est choisie parmi les fibres optiques minérales, en particulier les fibres optiques de silice, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique ; et les fibres optiques portant des chaînes d'oligomères fonctionnels, en particulier des chaînes de PVA, éventuellement partiellement acétylé, ladite fibre optique étant en particulier choisie parmi les fibres optiques minérales, plus particulièrement les fibres optiques de silice, avec i = 1 et W représentant O, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4, avec i = 1 et W représentant N ; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique, avec i = 0 ; et les fibres optiques portant des chaînes d'oligomères fonctionnels, en particulier des chaînes de PVA, éventuellement partiellement acétylé, avec i = 1 et W représentant O.

10. Procédé de préparation d'une fibre optique selon l'une quelconque des revendications précédentes, comprenant l'étape suivante :
(i) La mise en contact d'au moins une partie de la surface d'une fibre optique portant des groupes -OH, -NH₂ ou -COOH, avec :
- un composé (A) de formule suivante : 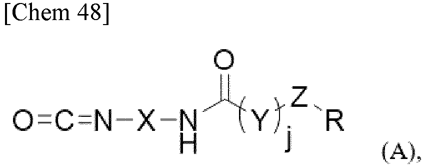 dans laquelle X, Y, j, Z et R sont tels que définis dans la revendication 1,
et
- un composé (A') de formule suivante : 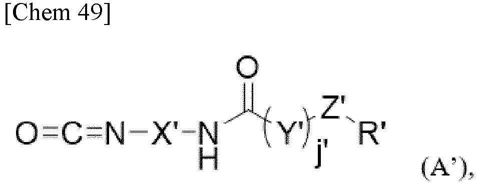
dans laquelle X', Y', j', Z' et R' sont tels que définis dans la revendication 1,
ou, lorsque W=W', i=i' et X=X', les étapes suivantes :
(i') la mise en contact d'au moins une partie de la surface d'une fibre optique portant des groupes -OH, -NH₂ ou -COOH, avec un composé (B) de formule suivante :
[Chem 50]
O=C=N-X-N=C=O (B),
dans laquelle X est tel que défini dans la revendication 1,
pour obtenir une fibre optique portant sur au moins une partie de sa surface une pluralité de groupes de formule (C) suivante : 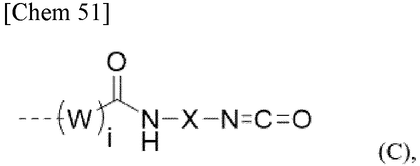
dans laquelle W, i et X sont tels que définis dans la revendication 1,
(ii') la mise en contact de la fibre obtenue à l'étape précédente (i') avec :
- un composé de formule (D) suivante : 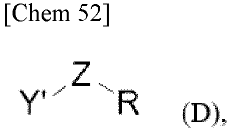
dans laquelle Z et R sont tels que définis dans la revendication 1,
et dans laquelle Y' est :
- un groupe -NH₂ lorsque j = 1 et Y est -NH- ;
- un groupe -OH lorsque j = 1 et Y est -O- ;
- un groupe -COOH lorsque j = 0 ;
et
- un composé de formule (D') suivante : 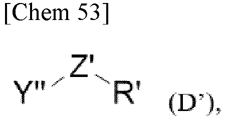
dans laquelle Z' et R' sont tels que définis dans la revendication 1,
et dans laquelle Y" est :
- un groupe -NH₂ lorsque j' = 1 et Y' est -NH- ;
- un groupe -OH lorsque j' = 1 et Y' est -O- ;
- un groupe -COOH lorsque j' = 0 ;
ou
(i") la mise en contact d'au moins une partie de la surface d'une fibre optique portant des groupes -OH, -NH₂ ou -COOH, avec un composé (B) de formule suivante :
[Chem 54]
O=C=N-Xₐ-N=C=O (B),
dans laquelle Xₐ est tel que défini précédemment,
pour obtenir une fibre optique portant sur au moins une partie de sa surface une pluralité de groupes de formule (C) suivante : 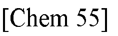 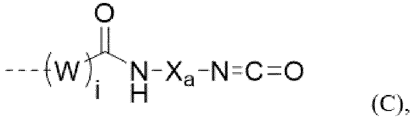
dans laquelle W, i et Xₐ sont tels que définis précédemment,
(ii") la mise en contact de la fibre obtenue à l'étape précédente (i') avec :
- un composé de formule (D'') suivante : 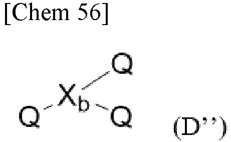 Où Q est NH₂, OH ou COOH, et X_{b} est tel que défini précédemment,
(iii") la mise en contact de la fibre obtenue à l'étape précédente (ii') avec :
- un composé de formule (IIIₒ) suivante : 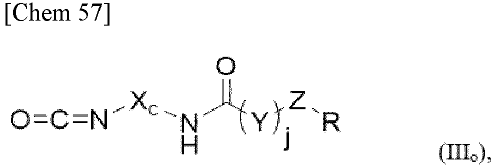
- et un composé de formule (IIIₒ') suivante : 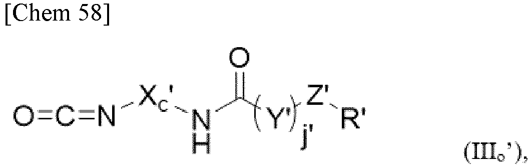 X_{c}, X_{c}', Y, Y', j, j', Z, Z', R et R' étant tels que définis ci-dessus.

11. Utilisation d'une fibre optique selon l'une quelconque des revendications 1 à 9, pour mesurer la concentration en un ion monovalent, en particulier en un ion de métal alcalin, plus particulièrement en ion lithium, notamment dans une batterie Li-ion, de préférence au sein de l'électrolyte de ladite batterie.

12. Procédé de mesure de la concentration en un ion monovalent, en particulier en un ion de métal alcalin, plus particulièrement en ion lithium, comprenant les étapes suivantes :
(i) Une étape de mise en contact des groupes A et B portés par au moins une partie de la surface de la fibre optique selon l'une quelconque des revendications 1 à 9 avec le milieu dans lequel la concentration en ion monovalent est à mesurer ;
(ii) Une étape d'excitation par transmission de lumière, en particulier de lumière UV de lumière visible violette, plus particulièrement de longueur d'onde comprise de 350 à 450 nm, dans ladite fibre optique ;
(iii) Une étape de mesure de la fluorescence émise et transmise par ladite fibre optique.

## Patentansprüche

1. Optische Faser, die auf mindestens einem Teil ihrer Oberfläche eine Vielzahl von Gruppen A und eine Vielzahl von Gruppen B trägt,
wobei die Gruppen A, die eine Gruppe R tragen, eine Aryl- oder eine Heteroarylgruppe sind, die in C₁-C₃ durch mindestens zwei benachbarte Gruppen substituiert ist, ausgewählt aus -OH und den Alkoxygruppen, insbesondere -OMe, wobei die benachbarten Gruppen ganz besonders -OH sind,
wobei die Gruppen B, die eine Gruppe R' tragen, ein organisches Kation sind.

2. Optische Faser nach Abschnitt 1, wobei:
- die Vielzahl von Gruppen A und die Vielzahl von Gruppen B direkt von dem mindestens einen Teil ihrer Oberfläche getragen werden; oder
- die Gruppen A durch mindestens eine Gruppe B, insbesondere durch eine Gruppe B, substituiert sind.

3. Optischer Faser nach einem der vorstehenden Ansprüche, wobei:
- die Gruppe R aus den folgenden Gruppen ausgewählt ist: 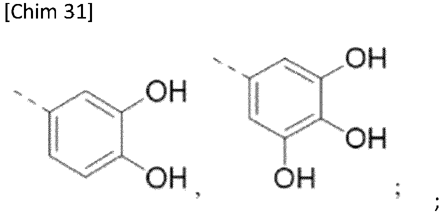 und/oder
- die Gruppe R' aus den quaternären Ammoniumverbindungen und den heteroaromatischen Kationen, insbesondere den aza-heteroaromatischen Kationen, ausgewählt ist, wobei die Gruppe R' insbesondere aus den folgenden Gruppen ausgewählt ist: 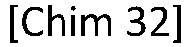 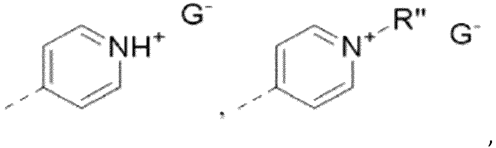 wobei
G⁻ ein Anion PF₆⁻, ein triflimidates Anion ([(CF₃SO₂)₂N]⁻) oder ein halogenisiertes Anion, zum Beispiel Cl⁻, darstellt, wobei G vorzugsweise PF₆⁻ ist;
R" ein Alkyl in C1-C3, insbesondere ein Methyl, darstellt.

4. Optische Faser nach einem der vorstehenden Ansprüche, wobei die Gruppen A und/oder B Ketten sind, die die Gruppe R bzw. R', insbesondere an terminaler Position, tragen, wobei diese Ketten unabhängig aus den linearen oder verzweigten Alkyl- oder Alkenylketten ausgewählt sind, die wahlweise unterbrochen sind von einem oder mehreren Atomen oder Gruppen, die ausgewählt sind aus -NH-, O, S, Harnstoff, Urethan, Amid, Ester, Diylarenen und Dilyheteroarenen.

5. Optische Faser nach einem der vorstehenden Ansprüche, wobei die Gruppen (A) von der folgenden Formel (I) sind und die Gruppen (B) von der folgenden Formel (I') sind: 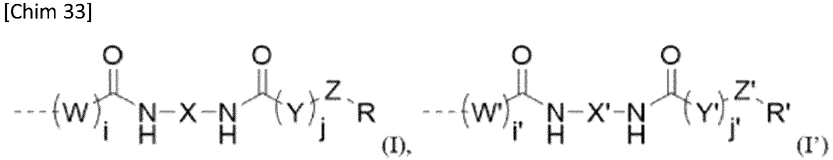 wobei
W, W', Y und Y' unabhängig aus O und NH ausgewählt sind;
i, i', j und j' unabhängig aus 0 und 1 ausgewählt sind;
X eine Gruppe der folgenden Formel (II) darstellt: 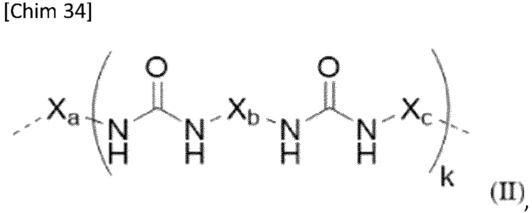
X' eine Gruppe der folgenden Formel (II') darstellt: 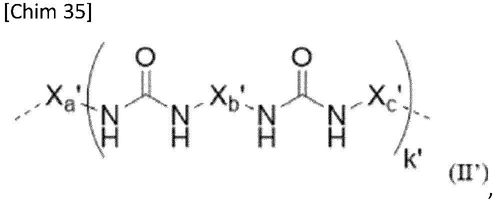 wobei
k und k' unabhängig aus 0 und 1 ausgewählt sind;
Xₐ, Xₐ', X_{c} und X_{c}' unabhängig ausgewählt sind aus:
- den Gruppen Xₐ₁, die lineare und in C₁-C₁₂ verzweigte Diylalkane sind, insbesondere den Gruppen der Formel -(CH₂)ₙ-, wobei n von 1 bis 12 ist, oder lineare oder in C₂- C₁₂ verzweigte Diylalkene, wobei die Gruppen Xₐ₁ besonders lineare und in C₁-C₁₂ verzweigte Diylalkane sind;
- den Gruppen der Formel -Xₐ₁-NH-Xₐ₁-, wobei Xₐ₁ bei jedem Auftreten unabhängig wie obenstehend definiert ist, insbesondere den Gruppen der Formel - (CH₂)ₙ-NH-(CH₂)ₘ-, wobei n und m unabhängig von 1 bis 12 sind;
- den Gruppen der Formel -Xₐ₁-NHC(=O)-NH-Xₐ₁- oder -Xₐ₁-NHC(=O)-NH-Xₐ₁-NHC(=O)- NH-Xₐ₁-, wobei Xₐ₁ bei jedem Auftreten unabhängig wie obenstehend definiert ist, insbesondere den Gruppen der Formel -(CH₂)ₙ-NHC(=O)-NH-(CH₂)ₘ-, wobei n und m unabhängig von 1 bis 12 sind;
X_{b} und X_{b}' unabhängig ausgewählt sind aus:
- den linearen und in C₁-C₁₂ verzweigten Diylalkanen, insbesondere den Gruppen der Formel - (CH₂)ₙ-, wobei n von 1 bis 12 ist, den in C₁-C₁₂ verzweigten Triylalkanen und den linearen und in C₂-C₁₂ verzweigten Diylalkenen, wobei die Gruppen X_{b} und X_{b}' besonders lineare und in C₁-C₁₂ verzweigte Diyl- oder Triylalkane sind; die wahlweise, besonders an terminaler Position (terminalen Positionen) mindestens eine Gruppe -(O-CH₂-CH₂)_{P}- oder -(O-CH₂-C(CH₃)H)_{P}- tragen, wobei p eine ganze Zahl von 1 bis 10 ist;
- den Diylarenen und den Diylheteroarenen;
wobei X_{b} wahlweise durch eine Gruppe A der folgenden Formel (III) substituiert ist: 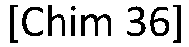 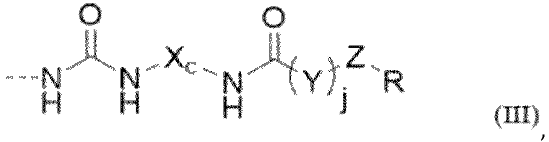
wobei X_{c}, Y, j, Z und R wie obenstehend oder untenstehend definiert sind,
wobei X_{b}' wahlweise durch eine Gruppe A der folgenden Formel (III') substituiert ist: 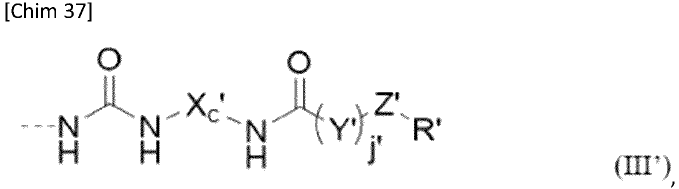
wobei Xc', Y', j', Z' und R' wie obenstehend oder untenstehend definiert sind,
wobei Z und Z' unabhängig fehlen oder ausgewählt sind aus den linearen und in C₁-C₁₂ verzweigten Diylalkanen und den linearen und in C₂-C₁₂ verzweigten Diylalkenen, wobei Z insbesondere ein in C₂ lineares Diylalkan oder -alken ist, wobei die Gruppe Z wahlweise durch eine Gruppe -COOH substituiert ist; R und R' wie in Anspruch 1 definiert sind, wobei die optische Faser insbesondere eine optische Faser ist, bei der:
- die Gruppen der Formel (I) aus den Gruppen der folgenden Formel ausgewählt sind: 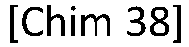 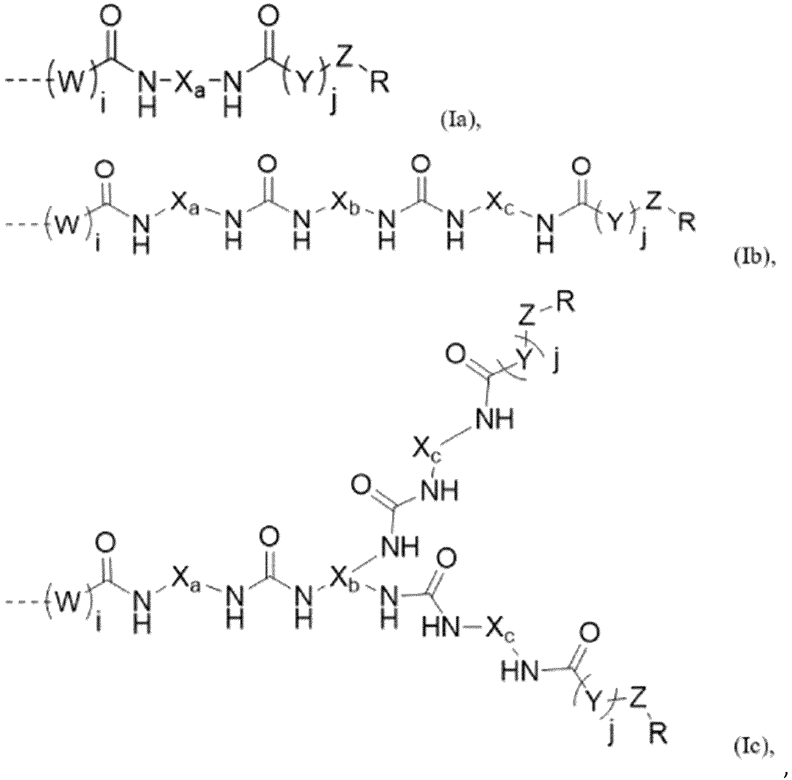 und/oder
- die Gruppen der Formel (I') aus den Gruppen der folgenden Formel ausgewählt sind:

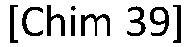

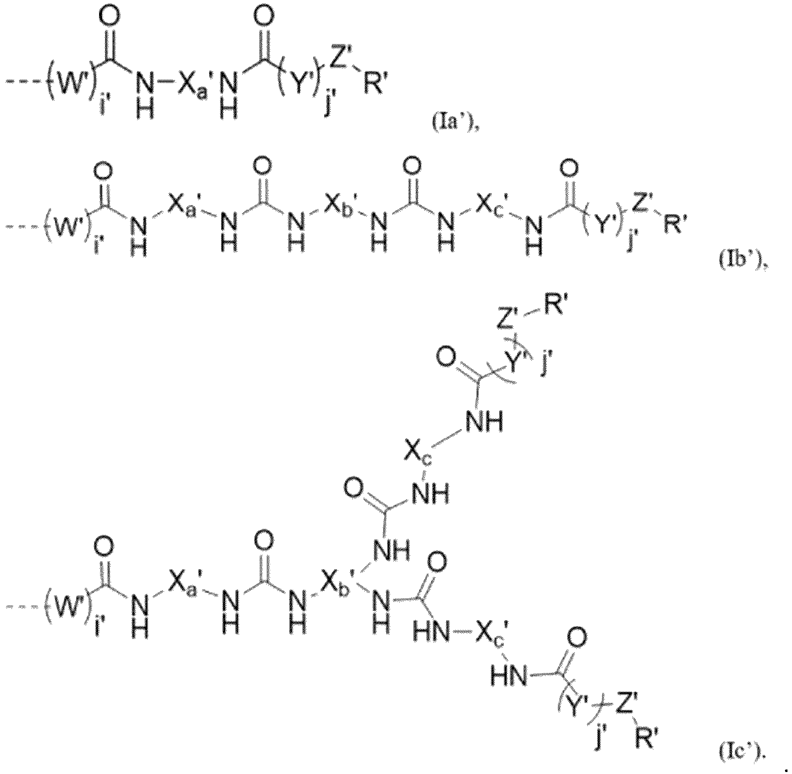

6. Optische Faser nach einem der vorstehenden Ansprüche, wobei die Gruppen der Formel (I) und die Gruppen der Formel (II) zusammen eine Gruppe der folgenden Formel bilden: 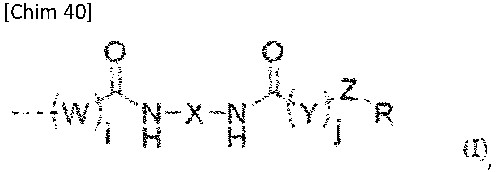 wobei:
W und Y unabhängig aus O und NH ausgewählt sind;
i und j unabhängig aus 0 und 1 ausgewählt sind;
X eine Gruppe der folgenden Formel (II) darstellt: 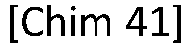 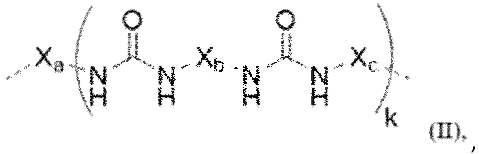 wobei:
k aus 0 und 1 ausgewählt ist;
Xₐ und X_{c} unabhängig ausgewählt sind aus:
- den Gruppen Xₐ₁, die lineare und in C₁-C₁₂ verzweigte Diylalkane sind, insbesondere den Gruppen der Formel -(CH₂)ₙ-, wobei n von 1 bis 12 ist, oder lineare oder in C₂- C₁₂ verzweigte Diylalkene, wobei die Gruppen Xa1 besonders lineare und in C₁-C₁₂ verzweigte Diylalkane sind;
- den Gruppen der Formel -Xₐ₁-NH-Xₐ₁-, wobei Xₐ₁ bei jedem Auftreten unabhängig wie obenstehend definiert ist, insbesondere den Gruppen der Formel - (CH₂)ₙ-NH-(CH₂)ₘ-, wobei n und m unabhängig von 1 bis 12 sind;
- den Gruppen der Formel -Xₐ₁-NHC(=O)-NH-Xₐ₁- oder -Xₐ₁-NHC(=O)-NH-Xₐ₁-NHC(=O)- NH-Xₐ₁-, wobei Xₐ₁ bei jedem Auftreten unabhängig wie obenstehend definiert ist, insbesondere den Gruppen der Formel -(CH₂)ₙ-NHC(=O)-NH-(CH₂)ₘ-, wobei n und m unabhängig von 1 bis 12 sind;
X_{b} ausgewählt ist aus:
- den linearen und in C₁-C₁₂ verzweigten Diylalkanen, insbesondere den Gruppen der Formel - (CH₂)ₙ-, wobei n von 1 bis 12 ist, den in C₁-C₁₂ verzweigten Triylalkanen und den linearen und in C₂-C₁₂ verzweigten Diylalkenen, wobei die Gruppen X_{b} und X_{b}' besonders lineare und in C₁-C₁₂ verzweigte Diyl- oder Triylalkane sind; die wahlweise, besonders an terminaler Position (terminalen Positionen) mindestens eine Gruppe -(O-CH₂-CH₂)_{P}- oder-(O-CH₂-C(CH₃)H)_{P}- tragen, wobei p eine ganze Zahl von 1 bis 10 ist;
- den Diylarenen und den Diylheteroarenen;
wobei X_{b} wahlweise durch eine Gruppe A der folgenden Formel (III) substituiert ist: 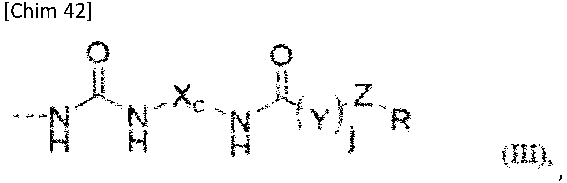
wobei X_{c}, Y, j, Z und R wie obenstehend oder untenstehend definiert sind,
Z fehlt oder ausgewählt ist aus den linearen und in C₁-C₁₂ verzweigten Diylalkanen und den linearen und in C₂-C₁₂ verzweigten Diylalkenen, wobei Z insbesondere ein in C₂ lineares Diylalkan oder -alken ist, wobei die Gruppe Z wahlweise durch eine Gruppe - COOH substituiert ist;
R eine Aryl- oder Heteroarylgruppe ist, die in C₁-C₃ durch mindestens zwei benachbarte Gruppen substituiert ist, ausgewählt aus -OH und den Alkoxygruppen, insbesondere -OMe,
wobei eines der Atome der Gruppen der Formel (I) eine Gruppe B wie im Anspruch 1 definiert trägt, wobei diese Gruppe B insbesondere von einem Atom der Gruppe X, insbesondere X_{b}, der Gruppen der Formel (I) getragen wird,
wobei die optische Faser insbesondere eine optische Faser ist, bei der die Gruppen der Formel (I) und die Gruppen der Formel (II) zusammen eine Gruppe der folgenden Formel bilden:

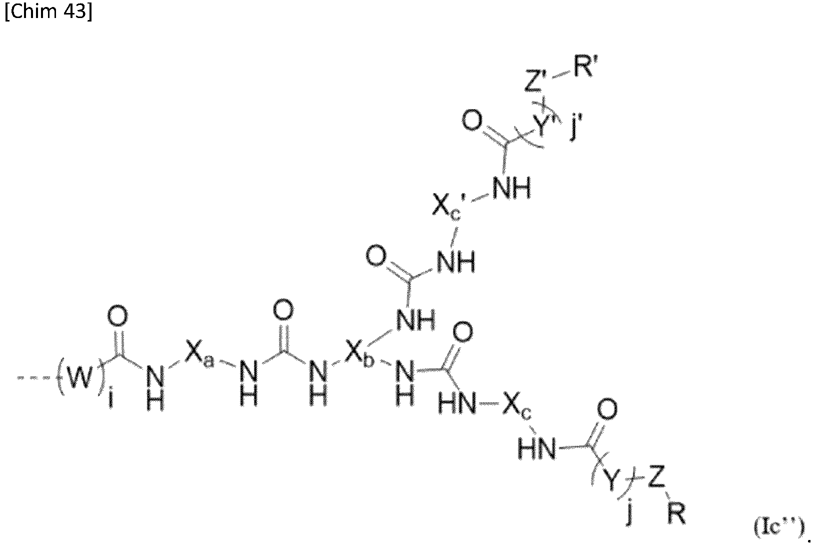

7. Optische Faser nach Anspruch 5 oder 6, wobei:
- (Y)ⱼZR aus den folgenden Gruppen ausgewählt ist: 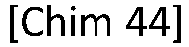 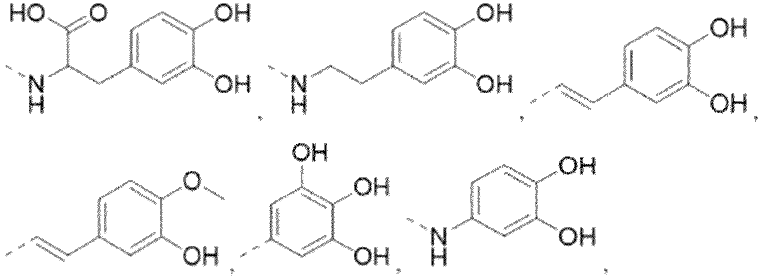 und insbesondere aus den folgenden Gruppen: 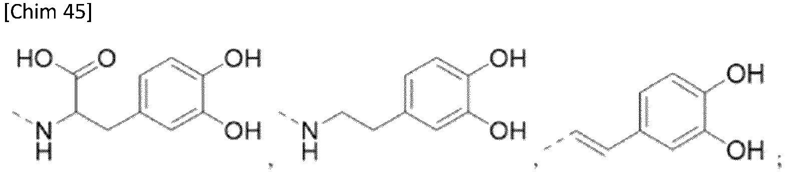 und/oder
- (Y')j-Z'R' aus den folgenden Gruppen ausgewählt ist: 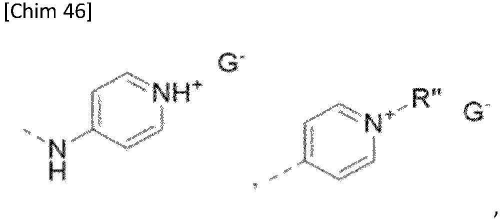 wobei
G⁻ ein Anion PF₆⁻, ein triflimidates Anion ([(CF₃SO₂)₂N]⁻) oder ein halogenisiertes Anion, zum Beispiel Cl⁻, darstellt, wobei G vorzugsweise PF₆- ist;
R" ein Alkyl in C1-C3, insbesondere ein Methyl, darstellt.

8. Optische Faser nach einem der Ansprüche 5 bis 7, wobei X_{b} und/oder X_{b}' aus den folgenden Gruppen ausgewählt sind: 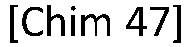 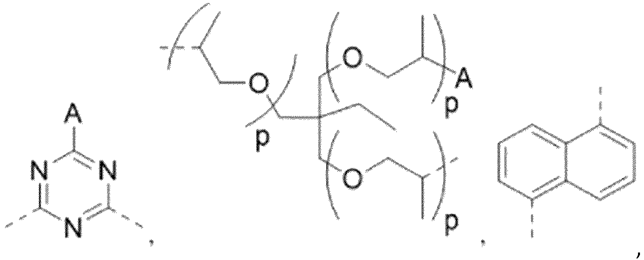 wobei A und p wie im Anspruch 5 definiert sind.

9. Optische Faser nach einem der vorstehenden Ansprüche, die ausgewählt ist aus den optischen Mineralfasern, insbesondere aus den optischen Siliziumfasern, oder den optischen Fasern, die eine Oxidschicht tragen, ausgewählt aus TiO₂, ZrO₂, SnO₂ oder HfO₂, vorzugsweise modifiziert durch eine Verbindung, die eine Phosphonsäure- sowie eine Primäramingruppe umfasst, besonders eine Verbindung der Formel (HO)₂P(=O)-(CH₂)_{X}NH₂, wobei x = 2, 3 oder 4; den organischen optischen Fasern, insbesondere den Fasern, die aus Methylpolymethacrylat (PMMA), gegebenenfalls aus teilweise chloriertem Methylpolymethacrylat, bestehen oder dieses umfassen, wobei das Methylpolymethacrylat wahlweise Carbonsäuregruppen trägt; den optischen Fasern, die funktionelle Oligomerketten, insbesondere PVA-Ketten, gegebenenfalls teilweise acetyliert, tragen,
wobei die optische Faser insbesondere ausgewählt ist aus den optischen Mineralfasern, ganz besonders den optischen Siliziumfasern, wobei i = 1 und W O darstellt, oder den optischen Fasern, die eine Oxidschicht tragen, ausgewählt aus TiO₂, ZrO₂, SnO₂ oder HfO₂, vorzugsweise modifiziert durch eine Verbindung, die eine Phosphonsäure- sowie eine Primäramingruppe umfasst, besonders eine Verbindung der Formel (HO)₂P(=O)-(CH₂)_{X}NH₂, wobei x = 2, 3 oder 4, wobei i = 1 und W N darstellt; den organischen optischen Fasern, insbesondere den Fasern, die aus Methylpolymethacrylat (PMMA), gegebenenfalls aus teilweise chloriertem Methylpolymethacrylat, bestehen oder dieses umfassen, wobei das Methylpolymethacrylat wahlweise Carbonsäuregruppen trägt, wobei i = 0; und den optischen Fasern, die funktionelle Oligomerketten, insbesondere PVA-Ketten, gegebenenfalls teilweise acetyliert, tragen, wobei i = 1 und W O darstellt.

10. Verfahren zur Herstellung einer optischen Faser nach einem der vorstehenden Ansprüche, das weiter den folgenden Schritt umfasst:
(i) das Setzen mindestens eines Teils der Oberfläche einer optischen Faser, die die Gruppen -OH, -NH₂ oder -COOH trägt, in Kontakt mit:
einer Verbindung (A) der folgenden Formel: 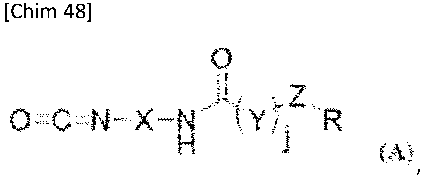 wobei X, Y, j, Z und R wie in Anspruch 1 definiert sind, und
einer Verbindung (A') der folgenden Formel: 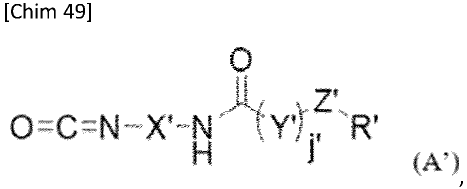
wobei X', Y', j', Z' und R' wie in Anspruch 1 definiert sind,
oder, wenn W=W', i=i' und X=X', die folgenden Schritte:
(i') das Setzen mindestens eines Teils der Oberfläche einer optischen Faser, die die Gruppen -OH, -NH₂ oder -COOH trägt, in Kontakt mit einer Verbindung (B) der folgenden Formel:
[Chim 50]
O=C=N-X-N=C=O (B)
wobei X wie in Anspruch 1 definiert ist,
um eine optische Faser zu erhalten, die auf mindestens einem Teil ihrer Oberfläche eine Vielzahl von Gruppen der folgenden Formel (C) trägt: 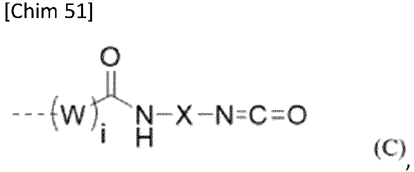
wobei W, i und X wie in Anspruch 1 definiert sind;
(ii') das Setzen der im vorherigen Schritt (i') erhaltenen Faser in Kontakt mit:
einer Verbindung mit der folgenden Formel (D): 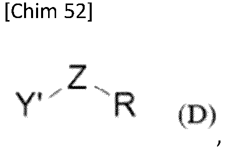
wobei Z und R wie in Anspruch 1 definiert sind;
und wobei Y' ist:
- eine Gruppe -NH₂, wenn j = 1 und Y -NH- ist;
- eine Gruppe -OH, wenn j = 1 und Y -O- ist;
- eine Gruppe -COOH, wenn j = 0 ist;
und
einer Verbindung mit der folgenden Formel (D'): 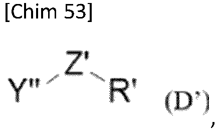
wobei Z' und R' wie in Anspruch 1 definiert sind;
und wobei Y" ist:
- eine Gruppe -NH₂, wenn j' = 1 und Y' -NH- ist;
- eine Gruppe -OH, wenn j' = 1 und Y' -O- ist;
- eine Gruppe -COOH, wenn j' = 0 ist;
oder
(i") das Setzen mindestens eines Teils der Oberfläche einer optischen Faser, die die Gruppen -OH, -NH₂ oder -COOH trägt, in Kontakt mit einer Verbindung (B) der folgenden Formel:
[Chim 54]
O=C=N-Xₐ-N=C=O (B),
wobei Xₐ wie obenstehend definiert ist;
um eine optische Faser zu erhalten, die auf mindestens einem Teil ihrer Oberfläche eine Vielzahl von Gruppen der folgenden Formel (C) trägt: 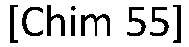 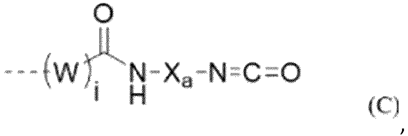
wobei W, i und Xₐ wie obenstehend definiert sind;
(ii") das Setzen der im vorherigen Schritt (i') erhaltenen Faser in Kontakt mit:
einer Verbindung mit der folgenden Formel (D"): 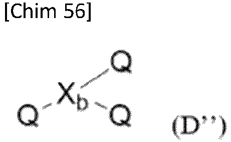 wobei Q NH₂, OH oder COOH ist, und X_{b} wie obenstehend definiert ist;
(iii") das Setzen der im vorherigen Schritt (ii') erhaltenen Faser in Kontakt mit:
- einer Verbindung mit der folgenden Formel (III₀): 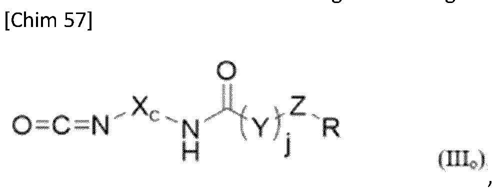 einer Verbindung mit der folgenden Formel (III0'): 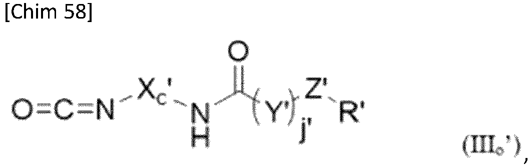
wobei X_{c}, X_{c}', Y, Y', j, j', Z, Z', R und R' wie obenstehend definiert sind.

11. Verwendung einer optischen Faser nach einem der Ansprüche 1 bis 9 zum Messen der Konzentration an einem monovalenten Ion, insbesondere eines Alkalimetallions, ganz besonders eines Lithiumions, besonders in einer Li-lonen-Batterie, vorzugsweise im Elektrolyten der Batterie.

12. Verfahren zur Messung der Konzentration an einem monovalenten Ion, insbesondere eines Alkalimetallions, ganz besonders eines Lithiumions, das die folgenden Schritte umfasst:
(i) einen Schritt des Setzens der Gruppen A und B, die von mindestens einem Teil der Oberfläche der optischen Faser nach einem der Ansprüche 1 bis 9 getragen werden, in Kontakt mit der Umgebung, in der die Konzentration an einem monovalenten Ion zu messen ist;
(ii) einen Schritt der Anregung durch Übertragung von Licht, insbesondere von violettem sichtbarem UV-Licht, ganz besonders einer Wellenlänge zwischen 350 und 450 nm, in der optischen Faser;
(iii) einen Schritt der Messung der von der optischen Faser emittierten und übertragenen Fluoreszenz.

## Claims

1. An optical fiber carrying on at least part of its surface a plurality of groups A and a plurality of groups B,
the groups A bearing a group R being an aryl or heteroaryl group substituted by at least two vicinal groups selected from -OH and C₁-C₃ alkoxy groups, in particular -OMe, said vicinal groups being more particularly -OH,
the groups B bearing a group R' being an organic cation.

2. The optical fiber according to claim 1, wherein:
- the plurality of groups A and the plurality of groups B are directly carried by said at least part of its surface; or
- the groups A are substituted by at least one group B, in particular a group B.

3. The optical fiber according to any one of the preceding claims, wherein:
- the group R is selected from the following groups: 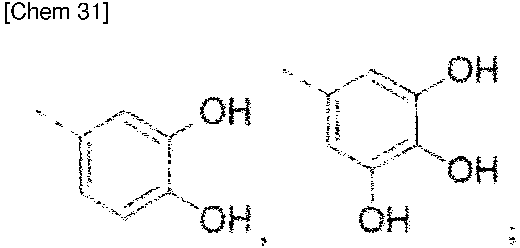 and/or
- the group R' is chosen from quaternary ammoniums and heteroaromatic cations, in particular aza-heteroaromatic cations, the group R' being chosen in particular from the following groups: 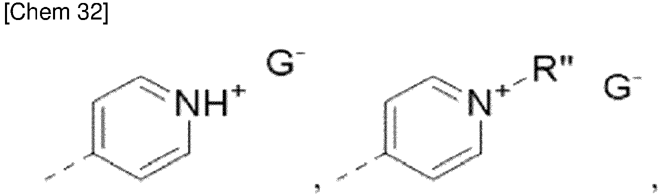 wherein:
G⁻ represents an anion PF₆⁻, a triflimidate anion ([(CF₃SO₂)₂N]⁻) or a halogenated anion, for example Cl⁻, G being preferably PF₆⁻;
R" represents a C1-C3 alkyl, in particular methyl.

4. The optical fiber according to any one of the preceding claims, wherein the groups A and/or B are chains bearing the group R or R' respectively, particularly in the terminal position, these chains being independently selected from linear or branched alkyl or alkenyl chains, which are optionally interrupted by one or more atoms or groups selected from -NH-, O, S, urea, urethane, amide, ester, arene diyls and heteroarene diyls.

5. The optical fiber according to any one of the preceding claims, wherein the groups (A) are of the following formula (I), and the groups (B) are of the following formula (I'): 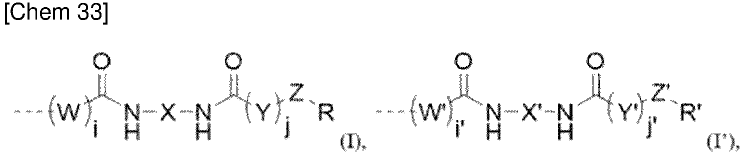 wherein:
W, W', Y and Y' are independently selected from O and NH;
i, i', j and j' are independently selected from 0 and 1;
X represents a group of the following formula (II): 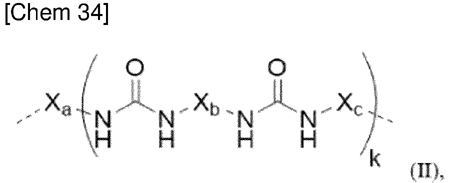
X' represents a group of the following formula (II'): 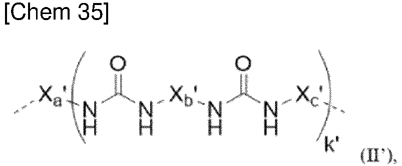 wherein:
k and k' are independently selected from 0 and 1;
Xₐ, Xₐ', X_{c} and X_{c}' are independently selected from:
- the groups Xₐ₁ being linear and branched C₁-C₁₂ alkanediyls, in particular the groups of the formula -(CH₂)ₙ- with n from 1 to 12, or linear and branched C₂-C₁₂ alkenediyls, the groups Xₐ₁ being in particular linear and branched C₁-C₁₂ alkanediyls;
- the groups of formula -Xₐ₁-NH-Xₐ₁-, wherein Xₐ₁ is at each occurrence independently as defined above, in particular the groups of formula -(CH₂)ₙ-NH-(CH₂)ₘ- with n and m being independently from 1 to 12;
- the groups of formula -Xₐ₁-NHC(=O)-NH-Xₐ₁- or -Xₐ₁-NHC(=O)-NH-Xₐ₁-NHC(=O)-NH-Xₐ₁-, wherein Xₐ₁ is at each occurrence independently as defined above, in particular groups of formula -(CH₂)ₙ-NHC(=O)-NH-(CH₂)ₘ- with n and m being independently from 1 to 12;
X_{b} and X_{b}' are independently selected from:
- the linear and branched C₁-C₁₂ alkanediyls, in particular groups of the formula -(CH₂)ₙ- with n from 1 to 12, branched C₁-C₁₂ alkanetriyls, and linear and branched C₂-C₁₂ alkenediyls, the groups X_{b} and X_{b}' being in particular linear and branched C₁-C₁₂ alkanediyls or triyls; optionally bearing, especially in terminal position(s), at least one -(O-CH₂-CH₂)ₚ- or -(O-CH₂-C(CH₃)H)ₚ- group, with p being an integer from 1 to 10;
- the arene diyls and heteroarene diyls;
X_{b} being optionally substituted by a group A of the following formula (III): 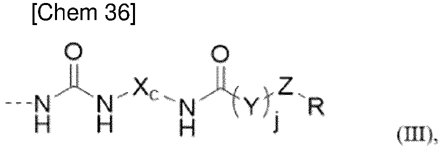
X_{c}, Y, j, Z and R being as defined above or below,
X_{b}' being optionally substituted by a group A of the following formula (III'): 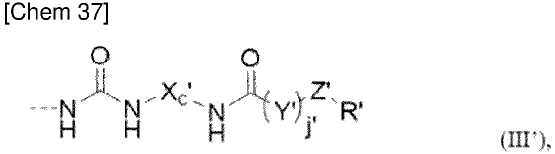
X_{c}', Y', j', Z' and R' being as defined above or below,
Z and Z' being independently absent or selected from linear and branched C₁-C₁₂ alkane diyls and linear and branched C₂-C₁₂ alkene diyls, Z being in particular a linear C₂ alkane or alkene diyl, said group Z being optionally substituted with a -COOH group; R and R' are as defined in claim 1,
said optical fiber being in particular an optical fiber in which:
- the groups of formula (I) are chosen from groups of the following formula : 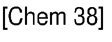 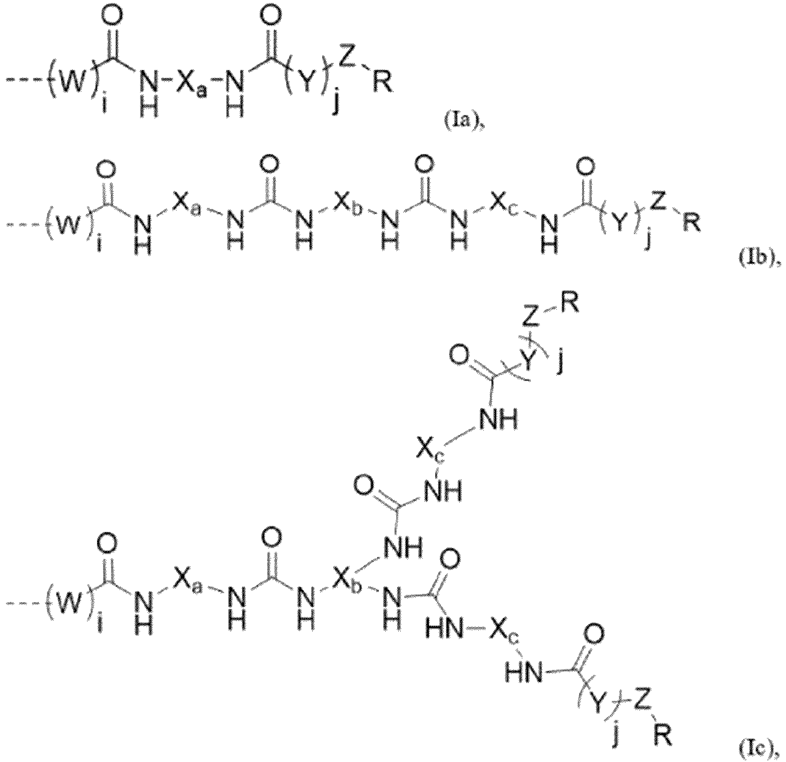 and/or
the groups of formula (I') are chosen from groups of the following formula:

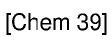

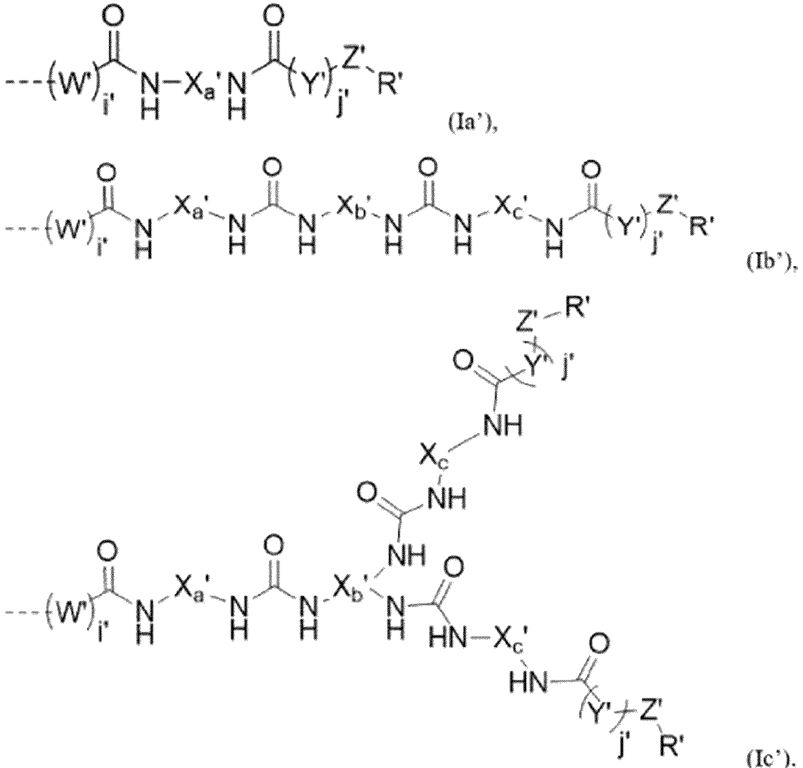

6. The optical fiber according to any one of the preceding claims, wherein the groups of formula (I) and the groups of formula (II) together form a group of the following formula: 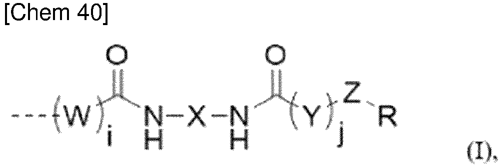 wherein:
W and Y are independently selected from O and NH;
i and j are independently selected from 0 and 1;
X represents a group of the following formula (II): 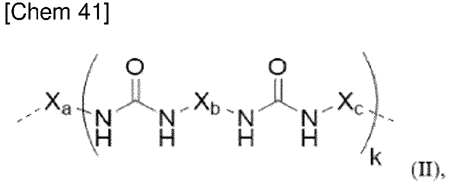 wherein:
k is chosen from 0 and 1;
Xₐ and X_{c} are independently selected from:
- the groups Xₐ₁ being linear and branched C₁-C₁₂ alkanediyls, in particular groups of the formula -(CH₂)ₙ- with n from 1 to 12, or linear and branched C₂-C₁₂ alkenediyls, the groups Xₐ₁ being in particular linear and branched C₁-C₁₂ alkanediyls;
- the groups of formula -Xₐ₁-NH-Xₐ₁-, wherein Xₐ₁ is at each occurrence independently as defined above, in particular groups of formula -(CH₂)ₙ-NH-(CH₂)ₘ- with n and m being independently from 1 to 12;
- the groups of formula -Xₐ₁-NHC(=O)-NH-Xₐ₁- or -Xₐ₁-NHC(=O)-NH-Xₐ₁-NHC(=O)-NH-Xₐ₁-, wherein Xₐ₁ is at each occurrence independently as defined above, in particular the groups of formula -(CH₂)ₙ-NHC(=O)-NH-(CH₂)ₘ- with n and m being independently from 1 to 12;
X_{b} is selected from:
- linear and branched C₁-C₁₂ alkanediyls, in particular groups of the formula -(CH₂)n-with n from 1 to 12, branched C₁-C₁₂ alkanetriyls, and linear and branched C₂-C₁₂ alkenediyls, the groups X_{b} and X_{b}' being in particular linear and branched C₁-C₁₂ alkanediyls or triyls; optionally bearing, especially in terminal position(s), at least one -(O-CH₂-CH₂)ₚ- or -(O-CH₂-C(CH₃)H)ₚ- group, with p being an integer from 1 to 10;
- the arene diyls and heteroarene diyls;
X_{b} being optionally substituted by a group A of the following formula (III): 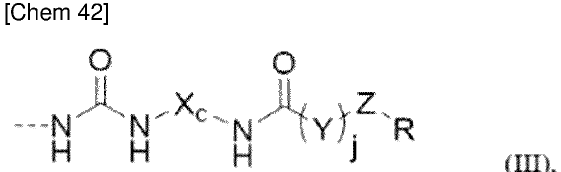
X_{c}, Y, j, Z and R being as defined above or below,
Z is absent or selected from linear and branched C₁-C₁₂ alkane diyls and linear and branched C₂-C₁₂ alkene diyls, Z being in particular a linear C₂ alkane or alkene diyl, said group Z being optionally substituted by a -COOH group;
R is an aryl or heteroaryl group substituted with at least two vicinal groups selected from -OH and the C₁-C₃ alkoxy groups, in particular -OMe,
one of the atoms of the groups of formula (I) bearing a group B as defined in claim 1, this group B being in particular carried by an atom of group X, in particular X_{b}, of the groups of formula (I),
said optical fiber being in particular an optical fiber wherein the groups of formula (I) and the groups of formula (II) together form a group of the following formula:

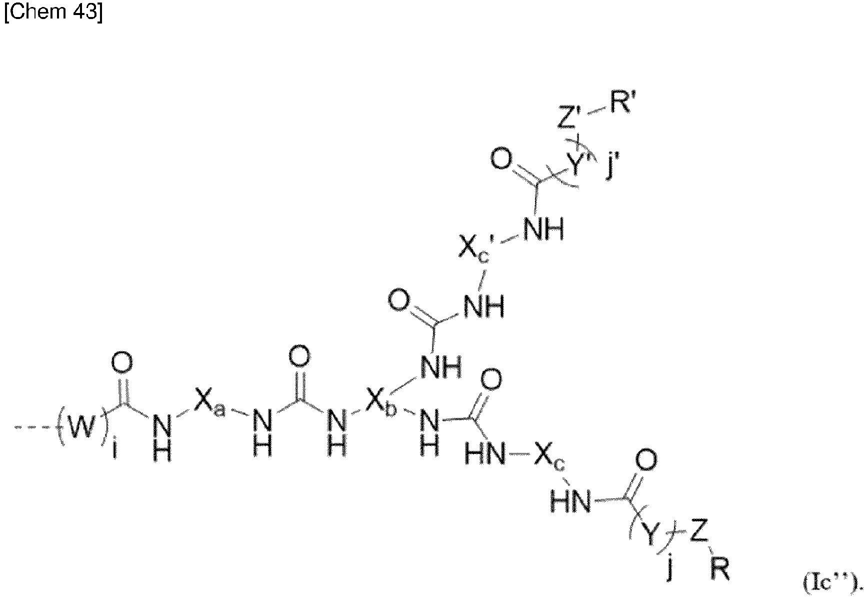

7. The optical fiber according to claim 5 or 6, wherein:
- (Y)ⱼZR is selected from the following groups: 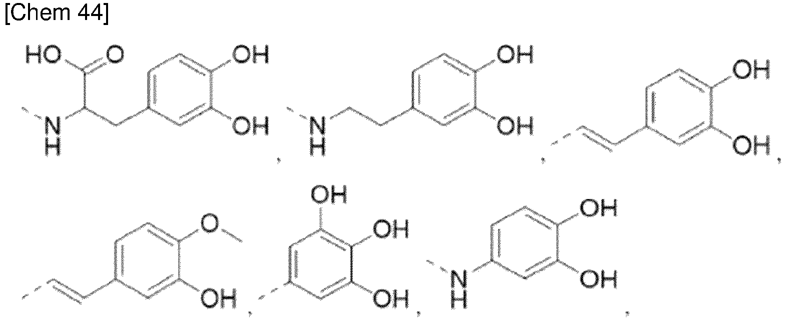 and in particular from the following groups 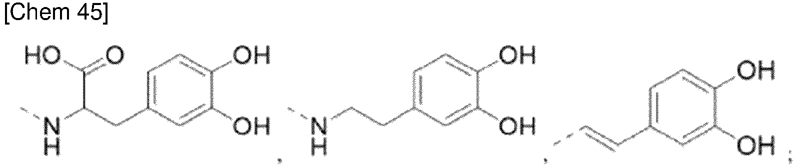 and/or
(Y')_{j'}Z'R' is selected from the following groups: 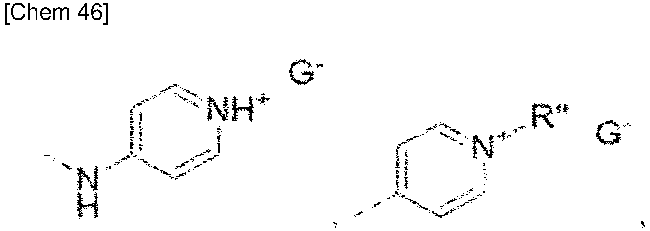 wherein:
G' represents a PF₆⁻ anion, a triflimidate anion ([(CF₃SO₂)₂N]⁻) or a halogenated anion, for example Cl⁻, G preferably being PF₆⁻;
R" represents C1-C3 alkyl, in particular methyl.

8. The optical fiber according to any one of claims 5 to 7, wherein X_{b} and/or X_{b}' are selected from the following groups: 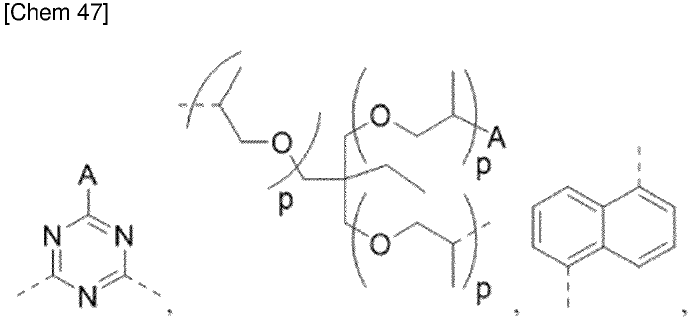 A and p being as defined in claim 5.

9. The optical fiber according to any one of the preceding claims, which is selected from inorganic optical fibers, in particular silica optical fibers, or optical fibers bearing an oxide layer selected from TiO₂, ZrO₂, SnO₂ or HfO₂, preferably modified with a compound comprising a phosphonic acid group as well as a primary amine, in particular a compound of formula (HO)₂P(=O)-(CH₂)ₓNH₂ with x = 2, 3 or 4; the organic optical fibers, in particular fibers made of or comprising polymethyl methacrylate (PMMA), optionally partially chlorinated polymethyl methacrylate, said polymethyl methacrylate optionally carrying carboxylic acid groups; and optical fibers carrying functional oligomer chains, in particular PVA chains, optionally partially acetylated,
said optical fiber being in particular selected from inorganic optical fibers, more particularly silica optical fibers, with i = 1 and W representing O, or optical fibers bearing an oxide layer selected from TiO₂, ZrO₂, SnO₂ or HfO₂, preferably modified with a compound comprising a phosphonic acid group as well as a primary amine, in particular a compound of formula (HO)₂P(=O)-(CH₂)ₓNH₂ with x = 2, 3 or 4, with i = 1 and W representing N ; the organic optical fibers, in particular the fibers consisting of or comprising polymethyl methacrylate (PMMA), optionally partially chlorinated polymethyl methacrylate, said polymethyl methacrylate optionally carrying carboxylic acid groups, with i = 0; and optical fibers carrying functional oligomer chains, in particular PVA chains, optionally partially acetylated, with i = 1 and W representing O.

10. A method of preparing an optical fiber according to any one of the preceding claims, comprising the following step of:
i) Contacting at least part of the surface of an optical fiber carrying groups of -OH, -NH₂ ou -COOH, with:
- a compound (A) of the following formula: 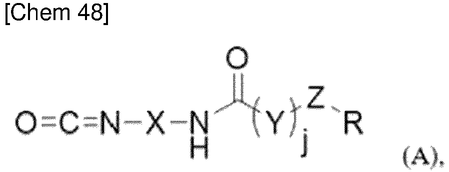 wherein X, Y, j, Z and R are as defined in claim 1,
and
- a compound (A') of the following formula: 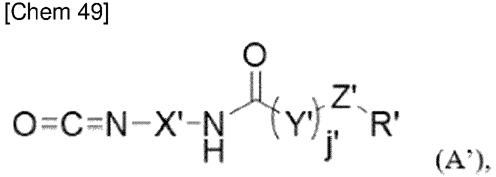
wherein X', Y', j', Z' and R' are as defined in claim 1,
or, when W=W', i=i' and X=X', the following steps:
(i') contacting at least part of the surface of an optical fiber bearing groups -OH, -NH₂ or -COOH, with a compound (B) of the following formula:
[Chem 50]
O=C=N-X-N=C=O (B),
wherein X is as defined in claim 1,
to obtain an optical fiber carrying on at least part of its surface a plurality of groups of the following formula (C): 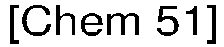 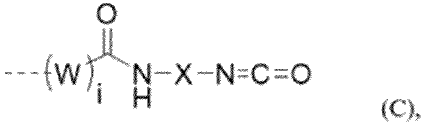
wherein W, i and X are as defined in claim 1,
(ii') contacting the fiber obtained in the previous step (i') with:
- a compound of the following formula (D): 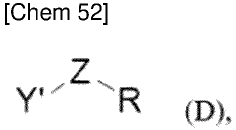
wherein Z and R are as defined in claim 1,
and wherein Y' is:
- a -NH₂ group when j = 1 and Y is -NH-;
- an -OH group when j = 1 and Y is -O-;
- a -COOH group when j = 0;
and
- a compound of the following formula (D'): 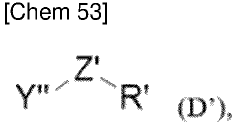
wherein Z' and R' are as defined in claim 1,
and where Y" is :
- an -NH₂ group when j' = 1 and Y' is -NH-;
- an -OH group when j' = 1 and Y' is -O-;
- a -COOH group when j' = 0;
or
(i") contacting at least part of the surface of an optical fiber carrying -OH, -NH₂ or - COOH groups, with a compound (B) of the following formula:
[Chem 54]
O=C=N-Xₐ-N=C=O (B),
wherein Xₐ is as defined above,
to obtain an optical fiber carrying on at least part of its surface a plurality of groups of the following formula (C): 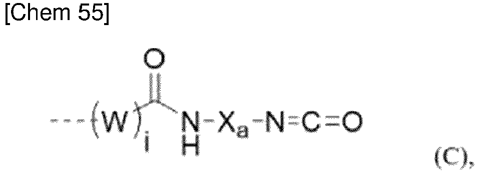
wherein W, i and Xₐ are as defined above,
(ii") contacting the fiber obtained in the previous step (i') with:
- a compound of the following formula (D"): 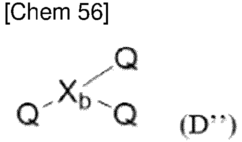 where Q is NH₂, OH or COOH, and X_{b} is as defined above,
(iii") contacting the fiber obtained in the previous step (ii') with:
- a compound of the following formula (IIIₒ): 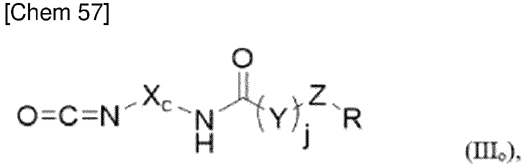
- and a compound of the following formula (IIIₒ') : 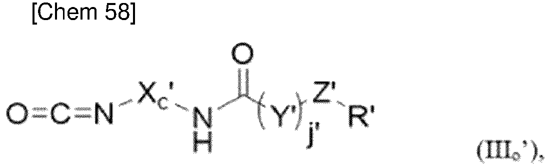 X_{c}, X_{c}', Y, Y', j, j', Z, Z', R and R' being as defined above.

11. A use of an optical fiber according to any one of claims 1 to 9, for measuring the concentration of a monovalent ion, in particular an alkali metal ion, more particularly a lithium ion, in particular in a Li-ion battery, preferably within the electrolyte of said battery.

12. A method for measuring the concentration of a monovalent ion, in particular an alkali metal ion, more particularly a lithium ion, comprising the following steps:
i) A step of contacting the groups A and B carried by at least part of the surface of the optical fiber according to any one of claims 1 to 9 with the medium in which the monovalent ion concentration is to be measured;
ii) A step of excitation by transmission of light, in particular UV light of visible violet light, more particularly of wavelength between 350 and 450 nm, in said optical fiber;
iii) A step for measuring the fluorescence emitted and transmitted by said optical fiber.
